# EUROPEAN PATENT APPLICATION

(11) **EP 3 328 014 A1**
(43) Date of publication of application: **30.05.2018**
(21) Application number: 15901948.8
(22) Date of filing: 25.08.2015
(51) Int. Cl.: H04L 29/06

(54) **DATA PACKET TRANSMISSION METHOD, APPARATUS, NODE DEVICE, AND SYSTEM**

(71) Applicant: Huawei Technologies Co., Ltd., Longgang District Shenzhen, Guangdong 518129 (CN)
(72) Inventor: WEI, Anni, Shenzhen Guangdong 518129 (CN); XIONG, Chunshan, Shenzhen Guangdong 518129 (CN)
(74) Representative: Gill Jennings & Every LLP
(86) International application number: PCT/CN2015/087979
(87) International publication number: WO 2017/031677

(57) **Abstract**

Embodiments of the present invention disclose a data packet transmission method, apparatus, and system, and a node device. The data packet transmission method includes: obtaining data type information and data packet identification information of a data packet; calculating the data type information and the data packet identification information by using a preset MAC algorithm, to obtain a first message authentication code; and sending the data packet that includes the data type information and the first message authentication code to a node device, so that the node device checks the data type information according to the first message authentication code. By means of the embodiments of the present invention, security identification may be performed on the data type information of the data packet, thereby improving transmission reliability of the data type information.

## Description

### TECHNICAL FIELD

The present invention relates to the field of computer application technologies, and in particular, to a data packet transmission method, apparatus, and system, and a node device.

### BACKGROUND

HTTP (Hyper Text Transfer Protocol, Hypertext Transfer Protocol) uses a request/response model, for transporting WWW (World Wide Web, World Wide Web) data. A sending terminal initiates a request, and establishes a TCP (Transmission Control Protocol, Transmission Control Protocol) connection to a specified port of a receiving terminal. The receiving terminal listens, on a specified port, to the request sent by the sending terminal. When the receiving terminal receives the request, the receiving terminal sends a response message to the sending terminal. Using HTTP2.0 as an example, an HTTP2.0 frame is higher layer data sent by an application layer to a transport layer, and includes a 9-byte frame header and a payload (a valid payload). The frame header may include a length field. One HTTP frame may be encapsulated in at least one TCP data packet, and each TCP data packet is sent to a node device by using a TCP connection. After receiving the TCP data packet, the node device usually performs blind parsing on the data packet, that is, decapsulates the received TCP data packet to obtain the HTTP2.0 frame, and determines a boundary of the HTTP2.0 frame according to the length field indicating a data volume of the payload, to further perform data parsing on the HTTP2.0 frame according to data in the payload. Because the data parsing manner is blind parsing, a data type of a data part of the TCP data packet cannot be accurately obtained in the foregoing data parsing manner, resulting in relatively low data parsing efficiency. Therefore, before each TCP data packet is sent to the node device by using the TCP connection, data type information may be added to a header of the TCP data packet, so that the node device obtains the data type of the data part of the TCP data packet according to the data type information. However, the data type information in the header of the TCP data packet is transmitted in plaintext. After intercepting the TCP data packet, an illegal intermediate entity may falsify the data type information in the TCP data packet, resulting in relatively low transmission reliability of the data type information.

### SUMMARY

Embodiments of the present invention provide a data packet transmission method, apparatus, and system, and a node device, so as to perform security identification on data type information of a data packet and improve transmission reliability of the data type information.

A first aspect of the present invention provides a data packet transmission method, including:
obtaining data type information and data packet identification information of a data packet;
calculating the data type information and the data packet identification information by using a preset MAC algorithm, to obtain a first message authentication code; and
sending the data packet that includes the data type information and the first message authentication code to a node device, so that the node device checks the data type information according to the first message authentication code.

In a first possible implementation, the data packet is a TCP data packet; and
after the calculating the data type information and the data packet identification information by using a preset MAC algorithm, to obtain a first message authentication code, the method further includes:
adding the data type information and the first message authentication code to a header of the TCP data packet.

With reference to the first possible implementation of the first aspect, in a second possible implementation, the data packet identification information includes at least one of the following: a send sequence number of the TCP data packet, an acknowledgement sequence number of the TCP data packet, or a preset parameter.

With reference to the second possible implementation of the first aspect, in a third possible implementation, before the obtaining data packet identification information of a data packet, the method further includes:
obtaining the preset parameter sent by a TLS layer, where a protocol stack upper layer at which the data packet is located includes the TLS layer.

With reference to the possible implementation of the first aspect, in a fourth possible implementation, the data packet is a TLS data packet; and
the sending the data packet that includes the data type information and the first message authentication code to a node device includes:
encapsulating the TLS data packet that includes the data type information and the first message authentication code in at least one TCP data packet; and
sending the at least one TCP data packet to the node device.

With reference to the fourth possible implementation of the first aspect, in a fifth possible implementation, the data type information is used to indicate a data type of a data part of a previous TLS data packet of the TLS data packet.

With reference to the fourth possible implementation of the first aspect, in a sixth possible implementation, the data packet identification information is a second message authentication code of a previous TLS data packet of the TLS data packet.

With reference to the fourth possible implementation of the first aspect, in a seventh possible implementation, before the obtaining data type information and data packet identification information of a data packet, the method further includes:
adding extension identifier information to the TLS data packet, where the extension identifier information is used to indicate that the TLS data packet is a data packet indicating a data type of a data part of a previous TLS data packet of the TLS data packet.

With reference to any one of the first aspect or the first to the seventh possible implementations of the first aspect, in an eighth possible implementation, before the sending the data packet that includes the data type information and the first message authentication code to a node device, the method further includes:
encrypting the first message authentication code by using a preset private key.

With reference to the eighth possible implementation of the first aspect, in a ninth possible implementation, before the encrypting the first message authentication code by using a preset private key, the method further includes:
obtaining the preset private key sent by the TLS layer.

With reference to any one of the first aspect or the first to the ninth possible implementations of the first aspect, in a tenth possible implementation, before the calculating the data type information and the data packet identification information by using a preset MAC algorithm, to obtain a first message authentication code, the method further includes:
when a TCP connection to the node device is established, negotiating with the node device to obtain the preset MAC algorithm.

With reference to any one of the first aspect or the first to the ninth possible implementations of the first aspect, in an eleventh possible implementation, before the calculating the data type information and the data packet identification information by using a preset MAC algorithm, to obtain a first message authentication code, the method further includes:
obtaining the preset MAC algorithm sent by the TLS layer.

With reference to any one of the first aspect or the first to the eleventh possible implementations of the first aspect, in a twelfth possible implementation, the preset MAC algorithm carries key information; and
the calculating the data type information and the data packet identification information by using a preset MAC algorithm, to obtain a first message authentication code includes:
calculating the data type information, the data packet identification information, and the key information by using the preset MAC algorithm, to obtain the first message authentication code.

With reference to the twelfth possible implementation of the first aspect, in a thirteenth possible implementation, before the calculating the data type information, the data packet identification information, and the key information by using the preset MAC algorithm, to obtain the first message authentication code, the method further includes:
when a TCP connection to the node device is established, negotiating with the node device to obtain the key information.

With reference to the twelfth possible implementation of the first aspect, in a fourteenth possible implementation, before the calculating the data type information, the data packet identification information, and the key information by using the preset MAC algorithm, to obtain the first message authentication code, the method further includes:
obtaining the key information sent by the TLS layer.

A second aspect of the present invention provides a data packet transmission method, including:
receiving a data packet sent by a node device, where the data packet carries data type information and a first message authentication code;
obtaining data packet identification information of the data packet;
calculating the data type information and the data packet identification information by using a preset MAC algorithm, to obtain a third message authentication code;
comparing the first message authentication code with the third message authentication code; and
checking the data type information according to a comparison result.

In a first possible implementation, the data packet is a TCP data packet; and
the data packet identification information includes at least one of the following: a send sequence number of the TCP data packet, an acknowledgement sequence number of the TCP data packet, or a preset parameter.

With reference to the first possible implementation of the second aspect, in a second possible implementation, before the obtaining data packet identification information of the data packet, the method further includes:
when a TCP connection to the node device is established, interacting with the node device to obtain the preset parameter.

With reference to the possible implementation of the second aspect, in a third possible implementation, the data packet is a TLS data packet; and
before the obtaining data packet identification information of the data packet, the method further includes:
determining that the TLS data packet includes extension identifier information, where the extension identifier information is used to indicate that the TLS data packet is a data packet indicating a data type of a data part of a previous TLS data packet of the TLS data packet.

With reference to the third possible implementation of the second aspect, in a fourth possible implementation, the data packet identification information is a second message authentication code of a previous TLS data packet of the TLS data packet.

With reference to any one of the second aspect or the first to the fourth possible implementations of the second aspect, in a fifth possible implementation, the first message authentication code is encrypted by using a preset private key; and
after the receiving a data packet sent by a node device, the method further includes:
decrypting the first message authentication code by using a preset public key.

With reference to the fifth possible implementation of the second aspect, in a sixth possible implementation, before the decrypting the first message authentication code by using a preset public key, the method further includes:
when a TCP connection to the node device is established, interacting with the node device to obtain the preset public key.

With reference to any one of the second aspect or the first to the sixth possible implementations of the second aspect, in a seventh possible implementation, before the calculating the data type information and the data packet identification information by using a preset MAC algorithm, to obtain a third message authentication code, the method further includes:
when a TCP connection to the node device is established, negotiating with the node device to obtain the preset MAC algorithm.

With reference to any one of the second aspect or the first to the sixth possible implementations of the second aspect, in an eighth possible implementation, before the calculating the data type information and the data packet identification information by using a preset MAC algorithm, to obtain a third message authentication code, the method further includes:
obtaining the preset MAC algorithm sent by the TLS layer.

With reference to any one of the second aspect or the first to the eighth possible implementations of the second aspect, in a ninth possible implementation, the preset MAC algorithm carries key information; and
the calculating the data type information and the data packet identification information by using a preset MAC algorithm, to obtain a third message authentication code includes:
calculating the data type information, the data packet identification information, and the key information by using the preset MAC algorithm, to obtain the third message authentication code.

With reference to the ninth possible implementation of the second aspect, in a tenth possible implementation, before the calculating the data type information, the data packet identification information, and the key information by using the preset MAC algorithm, to obtain the third message authentication code, the method further includes:
when a TCP connection to the node device is established, negotiating with the node device to obtain the key information.

With reference to the ninth possible implementation of the second aspect, in an eleventh possible implementation, before the calculating the data type information, the data packet identification information, and the key information by using the preset MAC algorithm, to obtain the third message authentication code, the method further includes:
obtaining the key information sent by the TLS layer.

A third aspect of the present invention provides a data packet transmission apparatus, including:
an information obtaining unit, configured to obtain data type information and data packet identification information of a data packet;
a calculation unit, configured to calculate the data type information and the data packet identification information by using a preset MAC algorithm, to obtain a first message authentication code; and
a data packet sending unit, configured to send the data packet that includes the data type information and the first message authentication code to a node device, so that the node device checks the data type information according to the first message authentication code.

In a first possible implementation, the data packet is a TCP data packet; and
the apparatus further includes:
an information addition unit, configured to: after the calculation unit calculates the data type information and the data packet identification information by using the preset MAC algorithm, to obtain the first message authentication code, add the data type information and the first message authentication code to a header of the TCP data packet.

With reference to the first possible implementation of the third aspect, in a second possible implementation, the data packet identification information includes at least one of the following: a send sequence number of the TCP data packet, an acknowledgement sequence number of the TCP data packet, or a preset parameter.

With reference to the second possible implementation of the third aspect, in a third possible implementation, the apparatus further includes:
a preset parameter obtaining unit, configured to: before the information obtaining unit obtains the data packet identification information of the data packet, obtain the preset parameter sent by a TLS layer, where a protocol stack upper layer at which the data packet is located includes the TLS layer.

With reference to the possible implementation of the third aspect, in a fourth possible implementation, the data packet is a TLS data packet; and
the data packet sending unit includes:
an encapsulation module, configured to encapsulate the TLS data packet that includes the data type information and the first message authentication code in at least one TCP data packet; and
a data packet sending module, configured to send the at least one TCP data packet to the node device.

With reference to the fourth possible implementation of the third aspect, in a fifth possible implementation, the data type information is used to indicate a data type of a data part of a previous TLS data packet of the TLS data packet.

With reference to the fourth possible implementation of the third aspect, in a sixth possible implementation, the data packet identification information is a second message authentication code of a previous TLS data packet of the TLS data packet.

With reference to the fourth possible implementation of the third aspect, in a seventh possible implementation, the apparatus further includes:
an information addition unit, configured to: before the information obtaining unit obtains the data type information and the data packet identification information of the data packet, add extension identifier information to the TLS data packet, where the extension identifier information is used to indicate that the TLS data packet is a data packet indicating a data type of a data part of a previous TLS data packet of the TLS data packet.

With reference to any one of the third aspect or the first to the seventh possible implementations of the third aspect, in an eighth possible implementation, the apparatus further includes:
an encryption unit, configured to: before the data packet sending unit sends the data packet that includes the data type information and the first message authentication code to the node device, encrypt the first message authentication code by using a preset private key.

With reference to the eighth possible implementation of the third aspect, in a ninth possible implementation, the apparatus further includes:
a preset private key obtaining unit, configured to: before the encryption unit encrypts the first message authentication code by using the preset private key, obtain the preset private key sent by the TLS layer.

With reference to any one of the third aspect or the first to the ninth possible implementations of the third aspect, in a tenth possible implementation, the apparatus further includes:
an algorithm negotiation unit, configured to: when a TCP connection to the node device is established, negotiate with the node device to obtain the preset MAC algorithm.

With reference to any one of the third aspect or the first to the ninth possible implementations of the third aspect, in an eleventh possible implementation, the apparatus further includes:
an algorithm negotiation unit, configured to: before the calculation unit calculates the data type information and the data packet identification information by using the preset MAC algorithm, to obtain the first message authentication code, obtain the preset MAC algorithm sent by the TLS layer.

With reference to any one of the third aspect or the first to the eleventh possible implementations of the third aspect, in a twelfth possible implementation, the preset MAC algorithm carries key information; and
the calculation unit is configured to calculate the data type information, the data packet identification information, and the key information by using the preset MAC algorithm, to obtain the first message authentication code.

With reference to the twelfth possible implementation of the third aspect, in a thirteenth possible implementation, the apparatus further includes:
a key information negotiation unit, configured to: when a TCP connection to the node device is established, negotiate with the node device to obtain the key information.

With reference to the twelfth possible implementation of the third aspect, in a fourteenth possible implementation, the apparatus further includes:
a key information negotiation unit, configured to: before the calculation unit calculates the data type information, the data packet identification information, and the key information by using the preset MAC algorithm, to obtain the first message authentication code, obtain the key information sent by the TLS layer.

A fourth aspect of the present invention provides a node device, including a processor, a memory, and a network interface, where the memory stores a set of program code, and the processor is configured to invoke the program code stored in the memory, to perform the following operations:
obtaining data type information and data packet identification information of a data packet;
calculating the data type information and the data packet identification information by using a preset MAC algorithm, to obtain a first message authentication code; and
sending the data packet that includes the data type information and the first message authentication code to a node device, so that the node device checks the data type information according to the first message authentication code.

A fifth aspect of the present invention provides a data packet transmission apparatus, including:
a data packet receiving unit, configured to receive a data packet sent by a node device, where the data packet carries data type information and a first message authentication code;
an information obtaining unit, configured to obtain data packet identification information of the data packet;
a calculation unit, configured to calculate the data type information and the data packet identification information by using a preset MAC algorithm, to obtain a third message authentication code;
a calculation unit, configured to compare the first message authentication code with the third message authentication code; and
a check unit, configured to check the data type information according to a comparison result.

In a first possible implementation, the data packet is a TCP data packet; and
the data packet identification information includes at least one of the following: a send sequence number of the TCP data packet, an acknowledgement sequence number of the TCP data packet, or a preset parameter.

With reference to the first possible implementation of the fifth aspect, in a second possible implementation, the apparatus further includes:
a preset parameter obtaining unit, configured to: when a TCP connection to the node device is established, interact with the node device to obtain the preset parameter.

With reference to the possible implementation of the fifth aspect, in a third possible implementation, the data packet is a TLS data packet; and
the apparatus further includes:
a determining unit, configured to: before the information obtaining unit obtains the data packet identification information of the data packet, determine that the TLS data packet includes extension identifier information, where the extension identifier information is used to indicate that the TLS data packet is a data packet indicating a data type of a data part of a previous TLS data packet of the TLS data packet.

With reference to the third possible implementation of the fifth aspect, in a fourth possible implementation, the data packet identification information is a second message authentication code of a previous TLS data packet of the TLS data packet.

With reference to any one of the fifth aspect or the first to the fourth possible implementations of the fifth aspect, in a fifth possible implementation, the first message authentication code is encrypted by using a preset private key; and
the apparatus further includes:
a decryption unit, configured to: after the data packet receiving unit receives the data packet sent by the node device, decrypt the first message authentication code by using a preset public key.

With reference to the fifth possible implementation of the fifth aspect, in a sixth possible implementation, the apparatus further includes:
a preset public key obtaining unit, configured to: when a TCP connection to the node device is established, interact with the node device to obtain the preset public key.

With reference to the fifth aspect or any one of the first to sixth possible implementations of the fifth aspect, in a seventh possible implementation, the apparatus further includes:
an algorithm negotiation unit, configured to: when a TCP connection to the node device is established, negotiate with the node device to obtain the preset MAC algorithm.

With reference to the fifth aspect or any one of the first to sixth possible implementations of the fifth aspect, in an eighth possible implementation, the apparatus further includes:
an algorithm negotiation unit, configured to: before the calculation unit calculates the data type information and the data packet identification information by using the preset MAC algorithm, to obtain the third message authentication code, obtain the preset MAC algorithm sent by the TLS layer.

With reference to any one of the fifth aspect or the first to the eighth possible implementations of the fifth aspect, in a ninth possible implementation, the preset MAC algorithm carries key information; and
the calculation unit is configured to calculate the data type information, the data packet identification information, and the key information by using the preset MAC algorithm, to obtain the third message authentication code.

With reference to the ninth possible implementation of the fifth aspect, in a tenth possible implementation, the apparatus further includes:
a key information negotiation unit, configured to: when a TCP connection to the node device is established, negotiate with the node device to obtain the key information.

With reference to the ninth possible implementation of the fifth aspect, in an eleventh possible implementation, the apparatus further includes:
a key information negotiation unit, configured to: before the calculation unit calculates the data type information, the data packet identification information, and the key information by using the preset MAC algorithm, to obtain the third message authentication code, obtain the key information sent by the TLS layer.

A sixth aspect of the present invention provides a node device, including a processor, a memory, and a network interface, where the memory stores a set of program code, and the processor is configured to invoke the program code stored in the memory, to perform the following operations:
receiving a data packet sent by a node device, where the data packet carries data type information and a first message authentication code;
obtaining data packet identification information of the data packet;
calculating the data type information and the data packet identification information by using a preset MAC algorithm, to obtain a third message authentication code;
comparing the first message authentication code with the third message authentication code; and
checking the data type information according to a comparison result.

A seventh aspect of the present invention provides a data packet transmission system, including the data packet transmission apparatus according to the third aspect and the data packet transmission apparatus according to the fifth aspect.

In the embodiments of the present invention, the data type information and the data packet identification information of the data packet are obtained, the data type information and the data packet identification information are calculated by using the preset MAC algorithm, to obtain the first message authentication code, and the data packet that includes the data type information and the first message authentication code is sent to the node device, so that the node device checks the data type information according to the first message authentication code. In this way, security identification may be performed on the data type information of the data packet, thereby improving transmission reliability of the data type information.

### BRIEF DESCRIPTION OF DRAWINGS

To describe the technical solutions in the embodiments of the present invention or in the prior art more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic flowchart of a data packet transmission method according to a first embodiment of the present invention;
FIG. 2 is a schematic flowchart of a data packet transmission method according to a second embodiment of the present invention;
FIG. 3 is a schematic flowchart of a data packet transmission method according to a third embodiment of the present invention;
FIG. 4 is a schematic flowchart of a data packet transmission method according to a fourth embodiment of the present invention;
FIG. 5A is a schematic structural diagram of a TCP data packet according to an embodiment of the present invention;
FIG. 5B is a schematic structural diagram of a TLS data packet according to an embodiment of the present invention;
FIG. 5C is a schematic framework diagram of data packet encapsulation and decapsulation according to a first embodiment of the present invention;
FIG. 5D is a schematic framework diagram of data packet encapsulation and decapsulation according to a second embodiment of the present invention;
FIG. 5E is a schematic framework diagram of data packet encapsulation and decapsulation according to a third embodiment of the present invention;
FIG. 6 is a schematic structural diagram of a data packet transmission apparatus according to a first embodiment of the present invention;
FIG. 7 is a schematic structural diagram of a data packet sending unit in FIG. 6 according to an embodiment of the present invention;
FIG. 8 is a structural schematic diagram of a node device according to a first embodiment of the present invention;
FIG. 9 is a schematic structural diagram of a data packet transmission apparatus according to a second embodiment of the present invention;
FIG. 10 is a structural schematic diagram of a node device according to a second embodiment of the present invention; and
FIG. 11 is a schematic structural diagram of a data packet transmission system according to an embodiment of the present invention.

### DESCRIPTION OF EMBODIMENTS

The following clearly describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

In an existing data packet transmission method, data type information of a data packet is added to a header of the data packet, and the data packet to which the data type information is added is sent to a node device, so that the node device obtains a data type of a data part of the data packet according to the data type information. Because the data type information in the header of the data packet is transmitted in plaintext, after intercepting a TCP data packet, an illegal intermediate entity may falsify data type information in the TCP data packet, resulting in relatively low transmission reliability of the data type information.

The embodiments of the present invention provide a data packet transmission method. Data type information and data packet identification information of a data packet are obtained, the data type information and the data packet identification information are calculated by using a preset MAC algorithm, to obtain a first message authentication code, and the data packet that includes the data type information and the first message authentication code is sent to a node device, so that the node device checks the data type information according to the first message authentication code. In this way, security identification may be performed on the data type information of the data packet, thereby improving transmission reliability of the data type information.

The data packet mentioned in the embodiments of the present invention may include a TCP data packet or a TLS (Transport Layer Security, Transport Layer Security) data packet. For example, the TCP data packet may be obtained by encapsulating one HTTP frame. The HTTP frame may be an HTTP2.0 frame. HTTP2.0 is located at an application layer. The HTTP2.0 frame is data in the application layer. One HTTP frame may be encapsulated in at least one TCP data packet. For another example, a TLS data packet may be obtained by encapsulating one HTTP frame. The TLS is located below the application layer and above a transport layer, and is a security protocol providing encryption, identity authentication, and data integrity assurance for network communication, and may encapsulate one HTTP frame in at least one TLS data packet. Further, one TLS data packet may be encapsulated in at least one TCP data packet.

The data type information mentioned in the embodiments of the present invention may be used to indicate a data type of a data part of the data packet. The data type of the data part of the data packet may be text, picture, video, audio, or the like.

The data packet identification information mentioned in the embodiments of the present invention may be used to identify the data packet. When the data packet is a TCP data packet, the data packet identification information may include one or more of a send sequence number of the TCP data packet, an acknowledgement sequence number of the TCP data packet, or a preset parameter. The preset parameter may be a random number for the TCP data packet. When the data packet is a TLS data packet, the data packet identification information may be a second message authentication code of a previous TLS data packet of the TLS data packet. The previous TLS data packet of the TLS data packet includes a second message authentication code. Different TLS data packets include different second message authentication codes.

The preset MAC (Message Authentication Code, MAC) algorithm mentioned in the embodiments of the present invention may be: performing a message digest on the data type information and the data packet identification information, to obtain a digest value with a fixed length (for example, 128 bits), and performing encryption processing on the digest value, to obtain the first message authentication code. The preset MAC algorithm is, for example, a DES algorithm. Optionally, the preset MAC algorithm may be: performing a message digest on the data type information and the data packet identification information, to obtain a digest value with a fixed length, using the digest value and key information that is obtained through negotiation as inputs, and obtaining the first message authentication code through calculation in a quadratic hash iteration manner. The preset MAC algorithm is, for example, an HMAC algorithm.

The node device mentioned in the embodiments of the present invention may include a client, a proxy server, a parsing server, or the like, for example, a web page browser, an email client, or an email server.

The data packet transmission method mentioned in the embodiments of the present invention may run on a terminal such as a server, a client, a proxy client, or a proxy server. This is not specifically limited by the embodiments of the present invention.

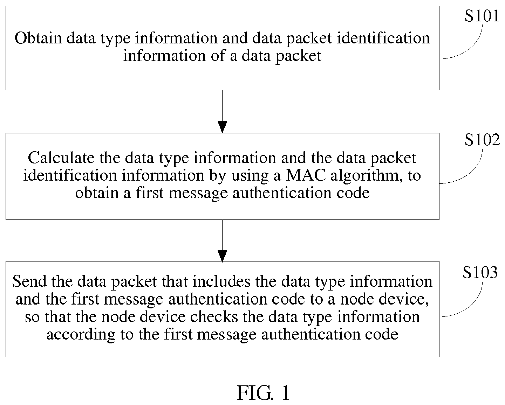

Referring to FIG. 1, FIG. 1 is a schematic flowchart of a data packet transmission method according to a first embodiment of the present invention. As shown in the figure, the data packet transmission method in this embodiment of the present invention may include the following steps.
S 101. Obtain data type information and data packet identification information of a data packet.

A terminal may obtain the data type information and the data packet identification information of the data packet. The data type information is be used to indicate a data type of a data part of the data packet. The data type of the data part of the data packet may be text, picture, video, audio, or the like. The data packet identification information is used to identify the data packet.

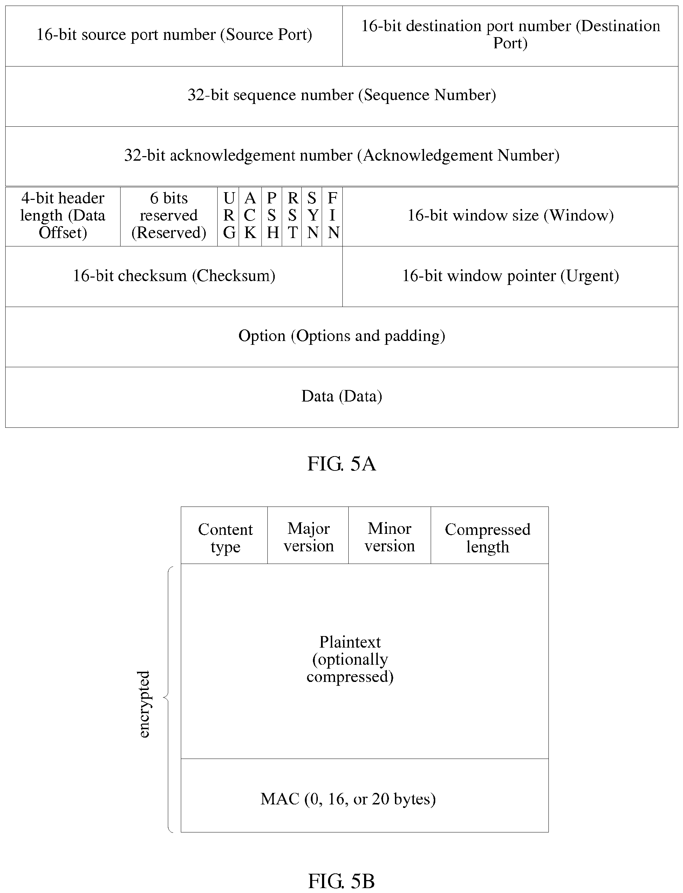

The data packet may be a TCP data packet. Using a schematic structural diagram of a TCP data packet shown in FIG. 5A as an example, the terminal may encapsulate one HTTP frame in at least one TCP data packet. If a data type of the HTTP frame is text, a data type of a data part of each TCP data packet obtained by encapsulating the HTTP frame is text. The terminal may obtain the data type information of the TCP data packet. For example, the data type information may be 0001, and used to indicate that the data type of the data part of the TCP data packet is text or html, that is, text. The terminal may further obtain the data packet identification information of the TCP data packet. The data packet identification information may include at least one of the following: a send sequence number of the TCP data packet, an acknowledgement sequence number of the TCP data packet, or a preset parameter. The preset parameter is a random number for the TCP data packet. An illegal intermediate entity cannot obtain the preset parameter.

The data packet may be a TLS data packet. Using a schematic structural diagram of a TLS data packet shown in FIG. 5B as an example, an HTTP frame is a basic protocol unit of HTTP. The HTTP runs at an application layer. The TLS data packet is a basic protocol unit of the TLS. The TLS runs below the application layer and above a transport layer. When a protocol stack upper layer includes a TLS layer, the terminal may encapsulate one HTTP frame in at least one TLS data packet. If a data type of the HTTP frame is text, a data type of a data part of each TLS data packet obtained by encapsulating the HTTP frame is text. The terminal may obtain the data type information of the TLS data packet. For example, the data type information may be 0001, and used to indicate that the data type of the data part of the TLS data packet is text or html, that is, text. The terminal may further obtain the data packet identification information of the TLS data packet. The data packet identification information may be a second message authentication code of a previous TLS data packet of the TLS data packet.

In an optional embodiment, when the data packet is a TCP data packet, before obtaining the data packet identification information of the TCP data packet, the terminal may obtain the preset parameter by means of cross-layer interaction between the TLS layer in the terminal and a TCP layer. For example, when the protocol stack upper layer at which the data packet is located includes the TLS layer, the TLS layer may send the preset parameter to the TCP layer, and the terminal may obtain the preset parameter sent by the TLS layer.

In an optional embodiment, when the data packet is a TLS data packet, before obtaining the data type information and the data packet identification information of the TLS data packet, the terminal may add extension identifier information to the TLS data packet. The extension identifier information is used to indicate that the TLS data packet is a data packet indicating a data type of a data part of a previous TLS data packet of the TLS data packet. Using the schematic structural diagram of the TLS data packet shown in FIG. 5B as an example, the extension identifier information may be ContentType ::=ENUMERATED{change_cipher_spec (20), alert (21), handshake (22), application-data (23), Extention data (24), (255)}. The terminal may add the extension identifier information to a header field Content Type of the TLS data packet. Extention data (24) in the extension identifier information is used to indicate that the TLS data packet is a data packet indicating a data type of a data part of a previous TLS data packet of the TLS data packet.

In a specific implementation, after encapsulating one HTTP frame in at least one TLS data packet, the terminal may add one TLS data packet after the TLS data packet, and add the extension identifier information to the added TLS data packet. The extension identifier information is used to indicate that the added TLS data packet is a data packet indicating a data type of a data part of a previous TLS data packet. After receiving the added TLS data packet, an entity that does not support such extension cannot identify the extension identifier information in the added TLS data packet, and discards the added TLS data packet.
S102. Calculate the data type information and the data packet identification information by using a preset MAC algorithm, to obtain a first message authentication code.

After obtaining the data type information and the data packet identification information of the data packet, the terminal may calculate the data type information and the data packet identification information by using the preset MAC algorithm, to obtain the first message authentication code.

In an optional embodiment, when the data packet is a TCP data packet, after obtaining the first message authentication code, the terminal may add the data type information and the first message authentication code to a header of the TCP data packet. Using the schematic structural diagram of the TCP data packet shown in FIG. 5A as an example, the terminal may add the data type information and the first message authentication code to an option field of the TCP data packet.

In an optional embodiment, when the data packet is a TLS data packet, after obtaining the first message authentication code, the terminal may add the data type information to a data part of the TLS data packet, and add the first message authentication code to a MAC field of the TLS data packet. Using the schematic structural diagram of the TLS data packet shown in FIG. 5B, the terminal may add the data type information to the data part of the TLS data packet, that is, Plaintext (optionally compressed), and add the first message authentication code to the MAC field of the TLS data packet.

In an optional embodiment, before calculating the data type information and the data packet identification information by using the preset MAC algorithm, the terminal may negotiate with the node device to obtain the preset MAC algorithm. For example, when a TCP connection to the node device is established, the terminal may negotiate with the node device to obtain the preset MAC algorithm. Preferably, the terminal may negotiate with the node device in a three-way handshake phase to obtain the preset MAC algorithm. For example, the terminal adds a supported MAC algorithm list to an options field of the data packet, and sends the data packet to which the supported MAC algorithm list is added to the node device. After receiving the data packet to which the supported MAC algorithm list is added, the node device selects a MAC algorithm most preferentially supported by the node device from the supported MAC algorithm list, adds the MAC algorithm to a to-be-sent data packet, and sends the to-be-sent data packet to which the MAC algorithm is added to the terminal. The terminal obtains the MAC algorithm most preferentially supported by the node device, to implement MAC algorithm negotiation between the terminal and the node device.

In an optional embodiment, before calculating the data type information and the data packet identification information by using the preset MAC algorithm, the terminal may obtain the preset MAC algorithm by means of cross-layer interaction between the TLS layer in the terminal and a TCP layer. For example, when the protocol stack upper layer at which the data packet is located includes the TLS layer, the TLS layer may send the preset MAC algorithm to the TCP layer, and the terminal may obtain the preset MAC algorithm sent by the TLS layer.

In an optional embodiment, the preset MAC algorithm may carry key information. In this case, before calculating the data type information and the data packet identification information by using the preset MAC algorithm, the terminal may negotiate with the node device to obtain the preset MAC algorithm and the key information. For example, when a TCP connection to the node device is established, the terminal may negotiate with the node device to obtain the preset MAC algorithm and the key information. Preferably, the terminal may negotiate with the node device in a three-way handshake phase to obtain the preset MAC algorithm and the key information. For example, the terminal adds a supported MAC algorithm list and key information to an options field of the data packet, and sends the data packet to which the supported MAC algorithm list and key information are added to the node device. After receiving the data packet to which the supported MAC algorithm list and key information are added, the node device selects a MAC algorithm most preferentially supported by the node device from the supported MAC algorithm list, adds the MAC algorithm and the key information of the node device to a to-be-sent data packet, and sends the to-be-sent data packet to which the MAC algorithm and the key information of the node device are added to the terminal. The terminal obtains the MAC algorithm most preferentially supported by the node device and the key information of the node device, to implement MAC algorithm and key information negotiation between the terminal and the node device.

In an optional embodiment, the preset MAC algorithm may carry key information. In this case, before performing MAC calculation on the data type information and the data packet identification information by using the preset MAC algorithm, the terminal may obtain the preset MAC algorithm and the key information by means of cross-layer interaction between the TLS layer in the terminal and a TCP layer. For example, when the protocol stack upper layer at which the data packet is located includes the TLS layer, the TLS layer may send the preset MAC algorithm and the key information to the TCP layer, and the TCP layer of the terminal may obtain the preset MAC algorithm and the key information that are sent by the TLS layer.
S103. Send the data packet that includes the data type information and the first message authentication code to a node device, so that the node device checks the data type information according to the first message authentication code.

The terminal may send the data packet that includes the data type information and the first message authentication code to the node device, so that the node device checks the data type information according to the first message authentication code. In a specific implementation, when the data type information or the data packet identification information is different, an obtained first message authentication code is different, and the data type information and the data packet identification information cannot be obtained according to the first message authentication code. In this case, after intercepting the data packet, an illegal intermediate entity still cannot obtain the data packet identification information according to the first message authentication code even if the illegal intermediate entity obtains the data type information and the first message authentication code. In addition, once the data type information is falsified, a message authentication code that is obtained by calculating the falsified data type information by using the preset MAC algorithm is different from the first message authentication code in the data packet. In this case, the first message authentication code may be used by the node device to check whether data type information in a received data packet is falsified.

In an optional embodiment, when the data packet is a TLS data packet, the terminal may encapsulate the TLS data packet that includes the data type information and the first message authentication code in at least one TCP data packet, and send the at least one TCP data packet to the node device, so that after receiving the TCP data packet, the node device performs decapsulation to obtain the TLS data packet, and checks the data type information according to the first message authentication code.

Further, optionally, the data type information in the TLS data packet is used to indicate a data type of a data part of a previous TLS data packet of the TLS data packet.

In an optional embodiment, the data type information in the TCP data packet is used to indicate a data type of a data part of the TCP data packet.

In an optional embodiment, before sending the data packet that includes the data type information and the first message authentication code to the node device, the terminal encrypts the first message authentication code by using a preset private key. In a specific implementation, a basic idea of data encryption is to change a representation form of information to fake sensitive information that needs to be protected, so that an unauthorized person cannot know content of the protected information. Changing of data encryption or decryption is implemented and controlled by using a key. The key is usually a random character string, and is a unique parameter for controlling changing between plaintext and ciphertext. Asymmetric encryption needs two keys: a public key (that is, a public key) and a private key (that is, a private key). The public key and the private key are one pair. If the public key is used to encrypt data, decryption can be performed only by using the corresponding private key. If the private key is used to encrypt data, decryption can be performed only by using the corresponding public key. The encrypted first message authentication code is a string of digits that can be generated only by an information sending end and that cannot be faked by another device. The string of digits is a valid proof of authenticity of the information sent by the information sending end.

The terminal encrypts the first message authentication code by using the preset private key, and transmits the encrypted first message authentication code and the data type information to the node device. The node device can decrypt the encrypted first message authentication code only by using the public key corresponding to the preset private key. Then the received data type information is calculated by using the preset MAC algorithm to obtain a third message authentication code. The third message authentication code is compared with the decrypted first message authentication code. If the third message authentication code is the same as the first message authentication code, it indicates that the received data type information is complete, and is not modified during transmission. If the third message authentication code is different from the first message authentication code, it indicates that the data type information is modified. Therefore, the MAC algorithm can be used to check integrity of the data type information.

In an optional embodiment, before encrypting the first message authentication code by using the preset private key, the terminal may obtain the preset private key by means of cross-layer interaction between the TLS layer in the terminal and the TCP layer. For example, when the protocol stack upper layer at which the data packet is located include the TLS layer, the TLS layer may send the preset private key to the TCP layer, and the TCP layer of the terminal may obtain the preset private key sent by the TLS layer.

In the data packet transmission method shown in FIG. 1, the data type information and the data packet identification information of the data packet are obtained, the data type information and the data packet identification information are calculated by using the preset MAC algorithm, to obtain the first message authentication code, and the data packet that includes the data type information and the first message authentication code is sent to the node device, so that the node device checks the data type information according to the first message authentication code. In this way, security identification may be performed on the data type information of the data packet, thereby improving transmission reliability of the data type information.

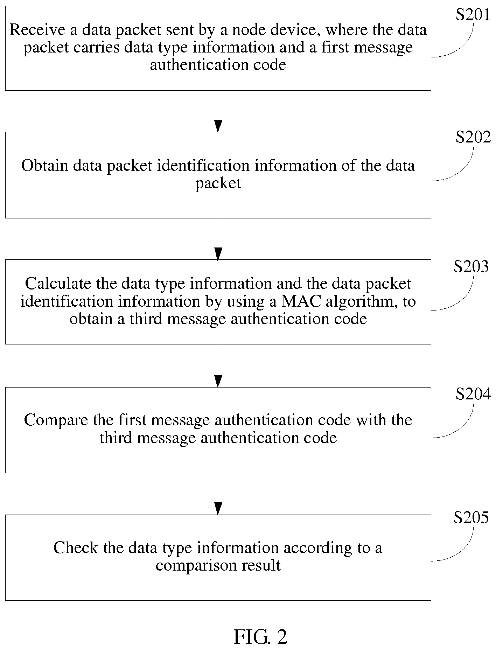

Referring to FIG. 2, FIG. 2 is a schematic flowchart of a data packet transmission method according to a second embodiment of the present invention. As shown in the figure, the data packet transmission method in this embodiment of the present invention may include the following steps.
S201. Receive a data packet sent by a node device, where the data packet carries data type information and a first message authentication code.

A terminal may receive the data packet sent by the node device, where the data packet carries the data type information and the first message authentication code. The data packet may be a TCP data packet or a TLS data packet. When the data packet is a TCP data packet, the data type information is used to indicate a data type of a data part of the TCP data packet. When the data packet is a TLS data packet, the data type information is used to indicate a data type of a data part of a previous TLS data packet of the TLS data packet.

In an optional embodiment, the first message authentication code is encrypted by using a preset private key, after receiving the data packet sent by the node device, the terminal may decrypt the first message authentication code by using a preset public key.

Further, optionally, before decrypting the first message authentication code by using the preset public key, the terminal may interacts with the node device to obtain the preset public key. For example, when a TCP connection to the node device is established, the terminal may interact with the node device to obtain the preset public key. Preferably, the terminal may interact with the node device in a three-way handshake phase to obtain the preset public key. For example, because the first message authentication code is encrypted by using the preset private key, the encrypted first message authentication code can be decrypted only by using a public key corresponding to the preset private key.
S202. Obtain data packet identification information of the data packet.

After receiving the data packet sent by the node device, the terminal may obtain the data packet identification information of the data packet.

In an optional embodiment, when the data packet is a TCP data packet, the data packet identification information obtained by the terminal may include at least one of the following: a send sequence number of the TCP data packet, an acknowledgement sequence number of the TCP data packet, or a preset parameter.

Further, optionally, when the data packet is a TCP data packet, before obtaining the data packet identification information of the TCP data packet, the terminal may interact with the node device to obtain a preset parameter. For example, when a TCP connection to the node device is established, the terminal may interact with the node device to obtain the preset parameter. Preferably, the terminal may interact with the node device in a three-way handshake phase to obtain the preset parameter. For example, after obtaining the preset parameter, the node device may add the preset parameter to a header of a previous TCP data packet of the TCP data packet, and sends the TCP data packet to which the preset parameter is added to the terminal. After receiving the TCP data packet to which the preset parameter is added, the terminal obtains the preset parameter. The preset parameter is used to indicate that the first message authentication code in the TCP data packet is obtained by calculating the preset parameter.

In an optional embodiment, when the data packet is a TLS data packet, the data packet identification information is a second message authentication code of a previous TLS data packet of the TLS data packet.

In an optional embodiment, when the data packet is a TLS data packet, before obtaining the data packet identification information of the TLS data packet, the terminal may determine that the TLS data packet includes extension identifier information. The extension identifier information is used to indicate that the TLS data packet is a data packet indicating a data type of a data part of a previous TLS data packet of the TLS data packet.
S203. Calculate the data type information and the data packet identification information by using a preset MAC algorithm, to obtain a third message authentication code.

After obtaining the data type information carried in the data packet and the data packet identification information of the data packet that are sent by the node device, the terminal may calculate the data type information and the data packet identification information by using the preset MAC algorithm, to obtain the third message authentication code.

In an optional embodiment, before calculating the data type information and the data packet identification information by using the preset MAC algorithm, the terminal may negotiate with the node device to obtain the preset MAC algorithm. For example, when a TCP connection to the node device is established, the terminal may negotiate with the node device to obtain the preset MAC algorithm. Preferably, the terminal may negotiate with the node device in a three-way handshake phase to obtain the preset MAC algorithm. For example, the terminal adds a supported MAC algorithm list to an options field of the data packet, and sends the data packet to which the supported MAC algorithm list is added to the node device. After receiving the data packet to which the supported MAC algorithm list is added, the node device selects a MAC algorithm most preferentially supported by the node device from the supported MAC algorithm list, adds the MAC algorithm to a to-be-sent data packet, and sends the to-be-sent data packet to which the MAC algorithm is added to the terminal. The terminal obtains the MAC algorithm most preferentially supported by the node device, to implement MAC algorithm negotiation between the terminal and the node device.

In an optional embodiment, before calculating the data type information and the data packet identification information by using the preset MAC algorithm, the terminal may obtain the preset MAC algorithm by means of cross-layer interaction between a TLS layer in the terminal and a TCP layer. For example, when the protocol stack upper layer at which the data packet is located includes the TLS layer, the TLS layer may send the preset MAC algorithm to the TCP layer, and the terminal may obtain the preset MAC algorithm sent by the TLS layer.

In an optional embodiment, the preset MAC algorithm may carry key information. In this case, before calculating the data type information and the data packet identification information by using the preset MAC algorithm, the terminal may negotiate with the node device to obtain the preset MAC algorithm and the key information. For example, when a TCP connection to the node device is established, the terminal may negotiate with the node device to obtain the preset MAC algorithm and the key information. Preferably, the terminal may negotiate with the node device in a three-way handshake phase to obtain the preset MAC algorithm and the key information. For example, the terminal adds a supported MAC algorithm list and key information to an options field of the data packet, and sends the data packet to which the supported MAC algorithm list and key information are added to the node device. After receiving the data packet to which the supported MAC algorithm list and key information are added, the node device selects a MAC algorithm most preferentially supported by the node device from the supported MAC algorithm list, adds the MAC algorithm and the key information of the node device to a to-be-sent data packet, and sends the to-be-sent data packet to which the MAC algorithm and the key information of the node device are added to the terminal. The terminal obtains the MAC algorithm most preferentially supported by the node device and the key information of the node device, to implement MAC algorithm and key information negotiation between the terminal and the node device.

In an optional embodiment, the preset MAC algorithm may carry key information. In this case, before calculating the data type information and the data packet identification information by using the preset MAC algorithm, the terminal may obtain the preset MAC algorithm and the key information by means of cross-layer interaction between the TLS layer in the terminal and the TCP layer. For example, when the protocol stack upper layer at which the data packet is located includes the TLS layer, the TLS layer may send the preset MAC algorithm and the key information to the TCP layer, and the TCP layer of the terminal may obtain the preset MAC algorithm and the key information that are sent by the TLS layer.
S204. Compare the first message authentication code with the third message authentication code.

After obtaining the first message authentication code carried in the data packet sent by the node device, and calculating the data type information and the data packet identification information by using the preset MAC algorithm, to obtain the third message authentication code, the terminal may compare the first message authentication code with the third message authentication code, to determine whether the first message authentication code is the same as third message authentication code.
S205. Check the data type information according to a comparison result.

The terminal may check the data type information according to the comparison result. In a specific implementation, when the first message authentication code is the same as the third message authentication code, it indicates that the received data type information is complete, and is not modified during transmission. Further, the data type of the data part of the data packet may be obtained according to the data type information, to implement data parsing on the data packet. When the first message authentication code is different from the third message authentication code, it indicates that the data type information is modified, and the terminal discards the data type information.

In the data packet transmission method shown in FIG. 2, the data packet sent by the node device is received, where the data packet carries the data type information and the first message authentication code. The data packet identification information of the data packet is obtained. The data type information and the data packet identification information are calculated by using the preset MAC algorithm, to obtain the third message authentication code. The first message authentication code is compared with the third message authentication code. The data type information is checked according to the comparison result. It may be determined, by checking the data type information, whether the data type information is falsified by an illegal intermediate entity.

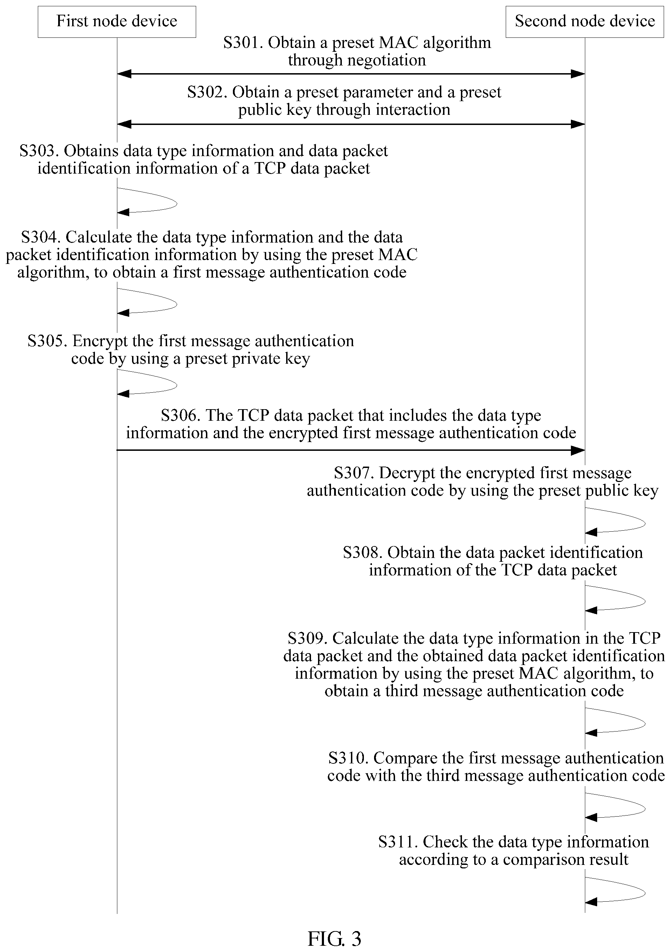

Referring to FIG. 3, FIG. 3 is a schematic flowchart of a data packet transmission method according to a third embodiment of the present invention. In this embodiment of the present invention, a first node device sends, to a second node device, a TCP data packet to which data type information and a first message authentication code are added. When the first node device is a server, the second node device may be a parsing server. When the first node device is a client, the second node device may be a parsing server. The parsing server is used to perform data parsing on the received TCP data packet, to obtain a data type of a data part of the TCP data packet. The parsing server may include a base station, a router, a packet gateway node, a serving gateway node, or the like. This is not specifically limited by this embodiment of the present invention. As shown in the figure, the data packet transmission method in this embodiment of the present invention may include the following steps.
S301. The first node device negotiates with the second node device to obtain a preset MAC algorithm.

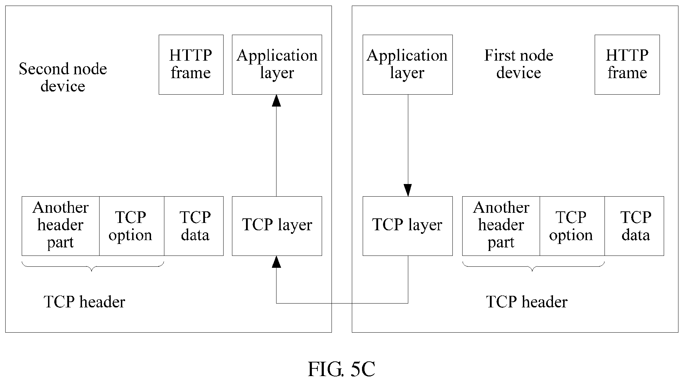

In this embodiment of the present invention, using a schematic framework diagram of data packet encapsulation and decapsulation shown in FIG. 5C as an example, a protocol stack upper layer in the first node device may include an application layer, a TCP layer, and the like. The first node device may encapsulate an HTTP frame at the application layer in at least one TCP data packet, and send the TCP data packet to which the data type information and the first message authentication code are added to the second node device by using a TCP connection. The second node device obtains the data type information in the TCP data packet, checks the data type information, decapsulates the TCP data packet to obtain the HTTP frame, and determines that the data type of the data part of the TCP data packet is a data type of the HTTP frame.

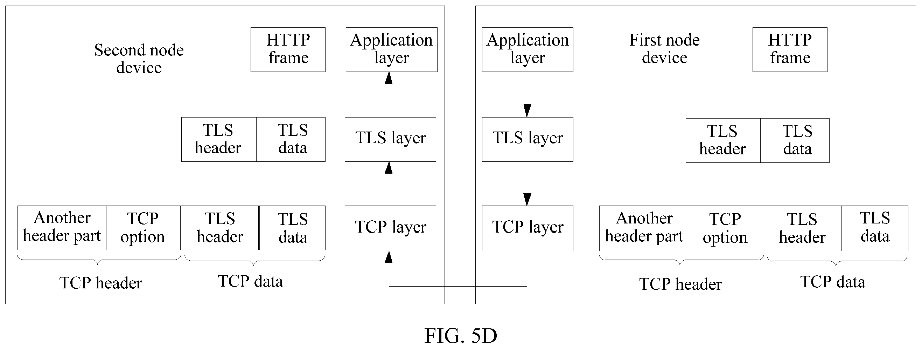

Using a schematic framework diagram of data packet encapsulation and decapsulation shown in FIG. 5D as an example, a protocol stack upper layer in the first node device includes an application layer, a TLS layer, a TCP layer, and the like. The first node device may encapsulate an HTTP frame at the application layer in at least one TLS data packet, encapsulate a TLS data packet at the TLS layer in at least one TCP data packet, and send the TCP data packet to which the data type information and the first message authentication code are added to the second node device by using a TCP connection. The second node device obtains the data type information in the TCP data packet, checks the data type information, decapsulates the TCP data packet to obtain the TLS data packet, decapsulates the TLS data packet to obtain the HTTP frame, and determines that the data type of the data part of the TCP data packet is a data type of the HTTP frame.

The first node device may negotiate with the second node device to obtain the preset MAC algorithm. For example, when a TCP connection to the second node device is established, the first node device may negotiate with the second node device to obtain the preset MAC algorithm. For another example, the first node device may obtain the preset MAC algorithm by means of cross-layer interaction between the TLS layer in the first node device and the TCP layer. The second node device may obtain the preset MAC algorithm by means of cross-layer interaction between the TLS layer in the second node device and the TCP layer.

In an optional embodiment, the first node device may negotiate with the second node device to obtain the preset MAC algorithm and key information. For example, when a TCP connection to the second node device is established, the first node device may negotiate with the second node device to obtain the preset MAC algorithm and the key information. For another example, the first node device may obtain the preset MAC algorithm and the key information by means of cross-layer interaction between the TLS layer in the first node device and the TCP layer. The second node device may obtain the preset MAC algorithm and the key information by means of cross-layer interaction between the TLS layer in the second node device and the TCP layer.

In an optional embodiment, the first node device and the second node device may regularly negotiate with each other by using preset duration as an update period to obtain the preset MAC algorithm, to implement updating of the preset MAC algorithm.
S302. The second node device interacts with the first node device to obtain a preset parameter and a preset public key.

After obtaining the preset parameter and a preset private key, the first node device may notify the second node device, so that after receiving the TCP data packet to which the data type information and the encrypted first message authentication code are added, the second node device decrypts the encrypted first message authentication code by using a public key corresponding to the preset private key, and calculates the data type information, the preset parameter, a send sequence number of the TCP data packet, and an acknowledgment sequence number of the TCP data packet by using the preset MAC algorithm obtained through negotiation, to obtain a third message authentication code. The preset parameter is a random number for the TCP data packet. The preset parameter is used to verify authenticity of the first node device. The preset public key and the preset private key are in a one-to-one correspondence. After the first node device encrypts the first message authentication code by using the preset private key, the second node device can decrypt the encrypted first message authentication code only by the public key corresponding to the preset private key.

It should be noted that, an execution order of step S301 and step S302 includes, but is not limited to, the foregoing manner. For example, when interacting with the first node device to obtain the preset parameter and the preset public key, the second node device may negotiate with the first node device to obtain the preset MAC algorithm. This is not specifically limited by this embodiment of the present invention.
S303. The first node device obtains the data type information and data packet identification information of the TCP data packet.

The first node device may obtain the data type information and the data packet identification information of the TCP data packet. The data type information is used to indicate the data type of the data part of the TCP data packet. For example, the data type information may be 0001, and used to indicate that the data type of the data part of the TCP data packet is text or html, that is, text. The data packet identification information may be one or more of a send sequence number of the TCP data packet, an acknowledgement sequence number of the TCP data packet, or the preset parameter obtained through negotiation.

Different TCP data packets have different send sequence numbers and different acknowledgment sequence numbers. The send sequence number and the acknowledgment sequence number may be used to prevent a playback attack. For example, the first node device calculates the data type information of the TCP data packet by using the preset MAC algorithm to obtain the first message authentication code, and sends the TCP data packet that includes the data type information and the first message authentication code to the second node device. The TCP data packet is intercepted by an illegal intermediate entity during transmission. The illegal intermediate entity falsifies the data type information into data type information of a previous TCP data packet, falsifies the first message authentication code into a first message authentication code of the previous TCP data packet, and sends the TCP data packet that includes the falsified data type information and first message authentication code to the second node device. The second node device obtains the data type information in the TCP data packet, calculates the obtained data type information by using the preset MAC algorithm to obtain a third message authentication code. If the first message authentication code is the same as the third message authentication code, the second node device considers that the data type information is not falsified. However, actually, the data type information is falsified into the data type information of the previous TCP data packet. Consequently, the data type information in the TCP data packet cannot be accurately checked. In this embodiment of the present invention, even if the illegal intermediate entity falsifies the data type information and the first message authentication code, the second node device calculates the falsified data type information and the obtained send sequence number (or acknowledgment sequence number) of the TCP data packet by using the preset MAC algorithm, to obtain a third message authentication code. Because a different input of a MAC algorithm always indicates a different output of the MAC algorithm, and different TCP data packets have different send sequence numbers and different acknowledgment sequence numbers, the first message authentication code is different from the third message authentication code, and the second node device may determine that the data type information is falsified.

In a specific implementation, the first node device encapsulates an HTTP frame in at least one TCP data packet. If a data type of the HTTP frame is text, the data type information of the TCP data packet may be 0001, used to indicate that the data type of the data part of the TCP data packet is text or html, that is, text. When the first node device encapsulates the HTTP frame in at least one TLS data packet, the first node device may add the data type information to a header field of the TLS data packet. When the first node device encapsulates the TLS data packet in at least one TCP data packet, the first node device may determine that the data type information in the TLS data packet is the data type information in the TCP data packet. After obtaining the TCP data packet through encapsulation, the first node device may search the header of the TCP data packet for the send sequence number and the acknowledgment sequence number.

In an optional embodiment, the first node device encapsulates the HTTP frame in at least one TCP data packet, and the data type of the data part of the at least one TCP data packet is the same. The first node device encapsulates the HTTP frame in at least one TLS data packet, and separately encapsulates each TLS data packet in at least one TCP data packet. The data type of the data part of the at least one TCP data packet is the same. The first node device needs to determine only the first TCP data packet and the last TCP data packet in at least one TCP data packet whose data parts have a same data type, and perform data type information security identification on the first TCP data packet and the last TCP data packet. After obtaining the at least one TCP data packet, if the second node device determines that data type information of the first TCP data packet and data type information of the last TCP data packet are not falsified, the second node device may obtain a data type of a data part of another TCP data packet. In a specific implementation, the first node device may determine at least three consecutive TCP data packets whose data parts have a same data type, select the first TCP data packet and the last TCP data packet from the at least three consecutive TCP data packets whose data parts have a same data type, and obtain data type information and data packet identification information of the first TCP data packet, and data type information and data packet identification information of the last TCP data packet. In this embodiment of the present invention, data type information security identification does not need to be performed on each TCP data packet, so that data packet processing efficiency can be improved.
S304. The first node device calculates the data type information and the data packet identification information by using the preset MAC algorithm, to obtain the first message authentication code.

In an optional embodiment, when the first node device obtains the preset MAC algorithm and key information by negotiating with the second node device, the first node device may calculate the data type information, the data packet identification information, and the key information by using the preset MAC algorithm, to obtain the first message authentication code.
S305. The first node device encrypts the first message authentication code by using a preset private key.
S306. The first node device sends the TCP data packet that includes the data type information and the encrypted first message authentication code to the second node device.
S307. The second node device decrypts the encrypted first message authentication code by using the preset public key.
S308. The second node device obtains the data packet identification information of the TCP data packet.

The second node device may obtain the data packet identification information of the TCP data packet. The data packet identification information may be one or more of a send sequence number of the TCP data packet, an acknowledgement sequence number of the TCP data packet, or the preset parameter obtained through negotiation.

In a specific implementation, after receiving the TCP data packet sent by the first node device, the second node device may searches a header of the TCP data packet for the send sequence number and the acknowledgment sequence number. The preset parameter is obtained through interaction between the first node device and the second node device.
S309. The second node device calculates the data type information in the TCP data packet and the obtained data packet identification information by using the preset MAC algorithm, to obtain a third message authentication code.

In an optional embodiment, when the first node device obtains the preset MAC algorithm and the key information by negotiating with the second node device, the second node device may calculate the data type information in the TCP data packet, the obtained data packet identification information, and the key information by using the preset MAC algorithm, to obtain the third message authentication code.
S310. The second node device compares the first message authentication code with the third message authentication code.
S311. The second node device checks the data type information according to a comparison result.

In the data packet transmission method shown in FIG. 3, the first node device obtains the data type information and the data packet identification information of the TCP data packet, calculates the data type information and the data packet identification information by using the preset MAC algorithm, to obtain the first message authentication code, encrypts the first message authentication code by using the preset private key, and sends the TCP data packet that includes the data type information and the encrypted first message authentication code to the second node device. The second node device decrypts the encrypted first message authentication code by using the preset public key, calculates the data type information in the TCP data packet and the obtained data packet identification information by using the preset MAC algorithm, to obtain the third message authentication code, compares the first message authentication code with the third message authentication code, and checks the data type information according to the comparison result. In this way, security identification may be performed on the data type information of the data packet, thereby improving transmission reliability of the data type information.

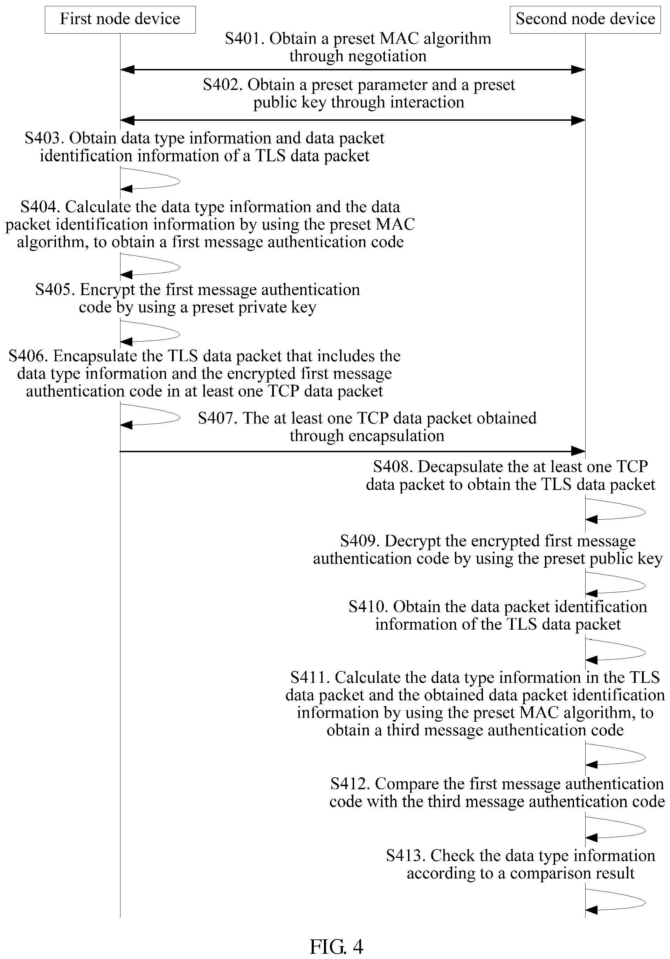

Referring to FIG. 4, FIG. 4 is a schematic flowchart of a data packet transmission method according to a fourth embodiment of the present invention. In this embodiment of the present invention, a protocol stack upper layer in the first node device includes an application layer, a TLS layer, a TCP layer, and the like. A terminal may encapsulate an HTTP frame at the application layer in at least one TLS data packet, and add a TLS data packet after the TLS data packet. The added TLS data packet is used to indicate a data type of a data part of a previous TLS data packet. As shown in the figure, the data packet transmission method in this embodiment of the present invention may include the following steps.
S401. The first node device negotiates with a second node device to obtain a preset MAC algorithm.
S402. The second node device interacts with the first node device to obtain a preset parameter and a preset public key.

It should be noted that, an execution order of step S401 and step S402 includes, but is not limited to, the foregoing manner. For example, when interacting with the first node device to obtain the preset parameter and the preset public key, the second node device may negotiate with the first node device to obtain the preset MAC algorithm. This is not specifically limited by this embodiment of the present invention.
S403. The first node device obtains data type information and data packet identification information of a TLS data packet.

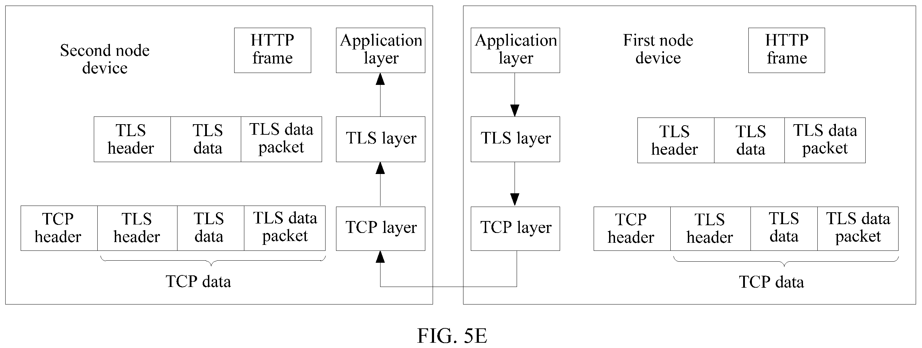

Using a schematic framework diagram of data packet encapsulation and decapsulation shown in FIG. 5E as an example, the first node device encapsulates an HTTP frame at the application layer in at least one TLS data packet, separately adds one TLS data packet after each TLS data packet, separately encapsulates the TLS data packet in at least one TCP data packet, and sends the at least one TCP data packet obtained through encapsulation to the second node device by using a TCP connection. The second node device identifies the added TLS data packet according to extension identifier information, obtains data type information in the added TLS data packet, checks the data type information, decapsulates the TCP data packet to obtain the TLS data packet, decapsulates the TLS data packet to obtain the HTTP frame, and determines that a data type of a data part of the added TLS data packet is a data type of a data part of a previous TLS data packet.

In a specific implementation, after encapsulating one HTTP frame in at least one TLS data packet, the first node device may obtain data type information and data packet identification information of a TLS data packet that includes the extension identifier information. The extension identifier information may be ContentType ::=ENUMERATED{change_cipher_spec (20), alert (21), handshake (22), application-data (23), Extention data (24), (255)}. Extention data (24) in the extension identifier information is used to indicate that the TLS data packet is a data packet indicating a data type of a data part of a previous TLS data packet of the TLS data packet. The data type information is used to indicate a data type of a data part of a previous TLS data packet of the TLS data packet. If a data type of the HTTP frame is text, the data type information of the TLS data packet may be 0001, and used to indicate that the data type of the data part of the previous TLS data packet of the TLS data packet is text or html, that is, text. The data packet identification information may be a second message authentication code of the previous TLS data packet. Using the schematic structural diagram of the TLS data packet shown in FIG. 5B as an example. The TLS data packet may include a header field (for example, content type, major version, minor version, and compressed length), a data part (that is, Plaintext (optionally compressed)), and a second message authentication code (MAC). The first node device may use the second message authentication code of the previous TLS data packet as the data packet identification information of the TLS data packet.

The second message authentication code may be used to prevent a playback attack. For example, the first node device calculates the data type information of the TLS data packet by using the preset MAC algorithm to obtain the first message authentication code, encapsulates the TLS data packet that includes the data type information and the first message authentication code in at least one TCP data packet, and sends the at least one TCP data packet to the second node device. The TCP data packet is intercepted by an illegal intermediate entity during transmission. The illegal intermediate entity falsifies the data type information into data type information of a previous TLS data packet, falsifies the first message authentication code into a first message authentication code of the previous TLS data packet, and sends the TCP data packet obtained by encapsulating the TLS data packet that includes the falsified data type information and first message authentication code to the second node device. The second node device obtains the data type information of the TLS data packet in the TCP data packet, calculates the obtained data type information by using the preset MAC algorithm to obtain a third message authentication code. If the first message authentication code is the same as the third message authentication code, the second node device considers that the data type information is not falsified. However, actually, the data type information is falsified into the data type information of the previous TLS data packet. Consequently, the data type information in the TLS data packet cannot be accurately checked. In this embodiment of the present invention, even if the illegal intermediate entity falsifies the data type information and the first message authentication code, the second node device calculates the falsified data type information and the obtained second message authentication code by using the preset MAC algorithm, to obtain a third message authentication code. Because a different input of a MAC algorithm always indicates a different output of the MAC algorithm, and different TLS data packets have different second message authentication codes, the first message authentication code is different from the third message authentication code, and the second node device may determine that the data type information is falsified.

In an optional embodiment, the first node device encapsulates the HTTP frame in at least one TLS data packet, and the data type of the data part of the at least one TLS data packet is the same. The first node device needs to determine only the first TLS data packet and the last TLS data packet in at least one TLS data packet whose data parts have a same data type, add one TLS data packet after the first TLS data packet, perform data type information security identification on the added TLS data packet, add one TLS data packet after the last TLS data packet, perform data type information security identification on the added TLS data packet, and send at least one TCP data packet obtained by encapsulating the TLS data packet to the second node device. After obtaining the at least one TCP data packet, if the second node device determines that data type information of the TLS data packet added after the first TLS data packet is not falsified, and data type information of the TLS data packet added after the last TLS data packet is not falsified, the second node device may obtain a data type of a data part of another TLS data packet. In a specific implementation, the first node device may determine at least three consecutive TLS data packets whose data parts have a same data type, select the first TLS data packet and the last TLS data packet from the at least three consecutive TLS data packets whose data parts have a same data type, and obtain data type information and data packet identification information of the TLS data packet added after the first TLS data packet, and data type information and data packet identification information of the TLS data packet added after the last TLS data packet. In this embodiment of the present invention, a TLS data packet does not need to be added after each TLS data packet, and data type information security identification does not need to be perform on each TLS data packet, so that data packet processing efficiency can be improved.
S404. The first node device calculates the data type information and the data packet identification information by using the preset MAC algorithm, to obtain a first message authentication code.
S405. The first node device encrypts the first message authentication code by using a preset private key.
S406. The first node device encapsulates the TLS data packet that includes the data type information and the encrypted first message authentication code in at least one TCP data packet.
S407. The first node device sends the at least one TCP data packet obtained through encapsulation to the second node device.
S408. The second node device decapsulates the at least one TCP data packet to obtain the TLS data packet.
S409. The second node device decrypts the encrypted first message authentication code by using the preset public key.
S410. The second node device obtains the data packet identification information of the TLS data packet.
S411. The second node device calculates the data type information in the TLS data packet and the obtained data packet identification information by using the preset MAC algorithm, to obtain a third message authentication code.
S412. The second node device compares the first message authentication code with the third message authentication code.
S413. The second node device checks the data type information according to a comparison result.

In the data packet transmission method shown in FIG. 4, the first node device obtains the data type information and the data packet identification information of the TLS data packet, calculates the data type information and the data packet identification information by using the preset MAC algorithm, to obtain the first message authentication code, encrypts the first message authentication code by using the preset private key, encapsulates the TLS data packet that includes the data type information and the encrypted first message authentication code in at least one TCP data packet, and sends the at least one TCP data packet obtained through encapsulation to the second node device. The second node device decapsulates the at least one TCP data packet to obtain the TLS data packet, decrypts the encrypted first message authentication code by using the preset public key, calculates the data type information in the TLS data packet and the obtained data packet identification information by using the preset MAC algorithm, to obtain the third message authentication code, compares the first message authentication code with the third message authentication code, and checks the data type information according to the comparison result. In this way, security identification may be performed on the data type information of the data packet, thereby improving transmission reliability of the data type information.

An embodiment of the present invention further provides a computer storage medium. The computer storage medium may store a program, and when executed, the program performs some or all steps in the method embodiments shown in FIG. 1, FIG. 3, or FIG. 4.

An embodiment of the present invention further provides a computer storage medium. The computer storage medium may store a program, and when executed, the program performs some or all steps in the method embodiments shown in FIG. 2 to FIG. 4.

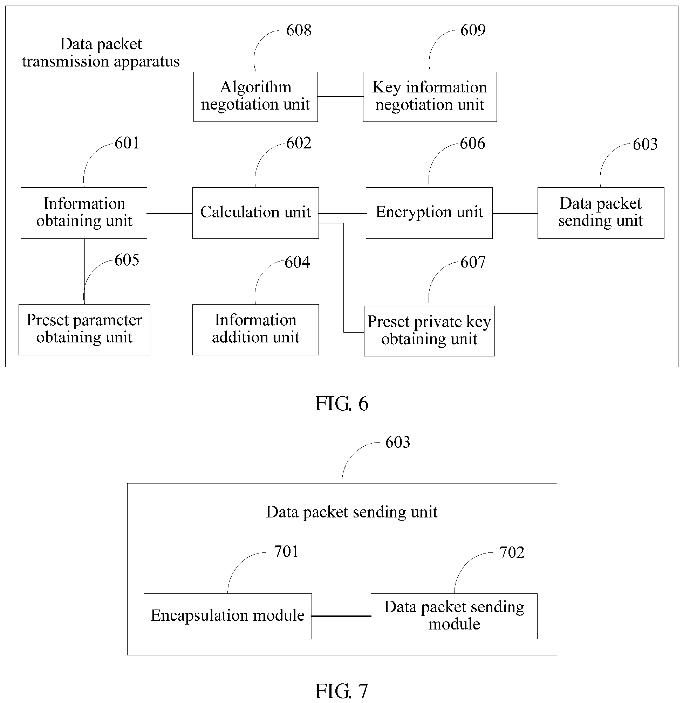

Referring to FIG. 6, FIG. 6 is a schematic structural diagram of a data packet transmission apparatus according to an embodiment of the present invention. The data packet transmission apparatus may be used to implement some or all steps in the method embodiments shown with reference to FIG. 1, FIG. 3, or FIG. 4. The data packet transmission apparatus may include at least an information obtaining unit 601, a calculation unit 602, and a data packet sending unit 603.

The information obtaining unit 601 is configured to obtain data type information and data packet identification information of a data packet.

The calculation unit 602 is configured to calculate the data type information and the data packet identification information by using a preset MAC algorithm, to obtain a first message authentication code.

The data packet sending unit 603 is configured to send the data packet that includes the data type information and the first message authentication code to a node device, so that the node device checks the data type information according to the first message authentication code.

In an optional embodiment, the data packet is a TCP data packet. In this case, the data packet transmission apparatus in this embodiment of the present invention may further include:
an information addition unit 604, configured to: after the calculation unit 602 calculates the data type information and the data packet identification information by using the preset MAC algorithm, to obtain the first message authentication code, add the data type information and the first message authentication code to a header of the TCP data packet.

Further, optionally, the data packet identification information may include at least one of the following: a send sequence number of the TCP data packet, an acknowledgement sequence number of the TCP data packet, or a preset parameter.

Further, optionally, the data packet transmission apparatus in this embodiment of the present invention may further include:
a preset parameter obtaining unit 605, configured to: before the information obtaining unit 601 obtains the data packet identification information of the data packet, obtain the preset parameter sent by a TLS layer, where a protocol stack upper layer at which the data packet is located includes the TLS layer.

In an optional embodiment, the data packet is a TLS data packet. In this case, as shown in FIG. 7, the data packet sending unit 603 in this embodiment of the present invention may further include:
an encapsulation module 701, configured to encapsulate the TLS data packet that includes the data type information and the first message authentication code in at least one TCP data packet; and
a data packet sending module 702, configured to send the at least one TCP data packet to the node device.

Further, optionally, the data type information is used to indicate a data type of a data part of a previous TLS data packet of the TLS data packet.

Further, optionally, the data packet identification information is a second message authentication code of a previous TLS data packet of the TLS data packet.

Further, optionally, the data packet transmission apparatus in this embodiment of the present invention may further include:
an information addition unit 604, configured to: before the information obtaining unit 601 obtains the data type information and the data packet identification information of the data packet, add extension identifier information to the TLS data packet, where the extension identifier information is used to indicate that the TLS data packet is a data packet indicating a data type of a data part of a previous TLS data packet of the TLS data packet.

In an optional embodiment, the data packet transmission apparatus in this embodiment of the present invention may further include:
an encryption unit 606, configured to: before the data packet sending unit 603 sends the data packet that includes the data type information and the first message authentication code to the node device, encrypt the first message authentication code by using a preset private key.

Further, optionally, the data packet transmission apparatus in this embodiment of the present invention may further include:
a preset private key obtaining unit 607, configured to: before the encryption unit 606 encrypts the first message authentication code by using the preset private key, obtain the preset private key sent by the TLS layer.

In an optional embodiment, the data packet transmission apparatus in this embodiment of the present invention may further include:
an algorithm negotiation unit 608, configured to: when a TCP connection to the node device is established, negotiate with the node device to obtain the preset MAC algorithm.

In an optional embodiment, the data packet transmission apparatus in this embodiment of the present invention may further include:
an algorithm negotiation unit 608, configured to: before the calculation unit 602 calculates the data type information and the data packet identification information by using the preset MAC algorithm, to obtain the first message authentication code, obtain the preset MAC algorithm sent by the TLS layer.

In an optional embodiment, the preset MAC algorithm may carry key information. In this case, the calculation unit 602 in this embodiment of the present invention is configured to calculate the data type information, the data packet identification information, and the key information by using the preset MAC algorithm, to obtain the first message authentication code.

Further, optionally, the data packet transmission apparatus in this embodiment of the present invention may further include:
a key information negotiation unit 609, configured to: when a TCP connection to the node device is established, negotiate with the node device to obtain the key information.

Further, optionally, the data packet transmission apparatus in this embodiment of the present invention may further include:
a key information negotiation unit 609, configured to: before the calculation unit 602 calculates the data type information, the data packet identification information, and the key information by using the preset MAC algorithm, to obtain the first message authentication code, obtain the key information sent by the TLS layer.

In the data packet transmission apparatus shown in FIG. 6, the information obtaining unit 601 obtains the data type information and the data packet identification information of the data packet. The calculation unit 602 calculates the data type information and the data packet identification information by using the preset MAC algorithm, to obtain the first message authentication code. The data packet sending unit 603 sends the data packet that includes the data type information and the first message authentication code to the node device, so that the node device checks the data type information according to the first message authentication code. In this way, security identification may be performed on the data type information of the data packet, thereby improving transmission reliability of the data type information.

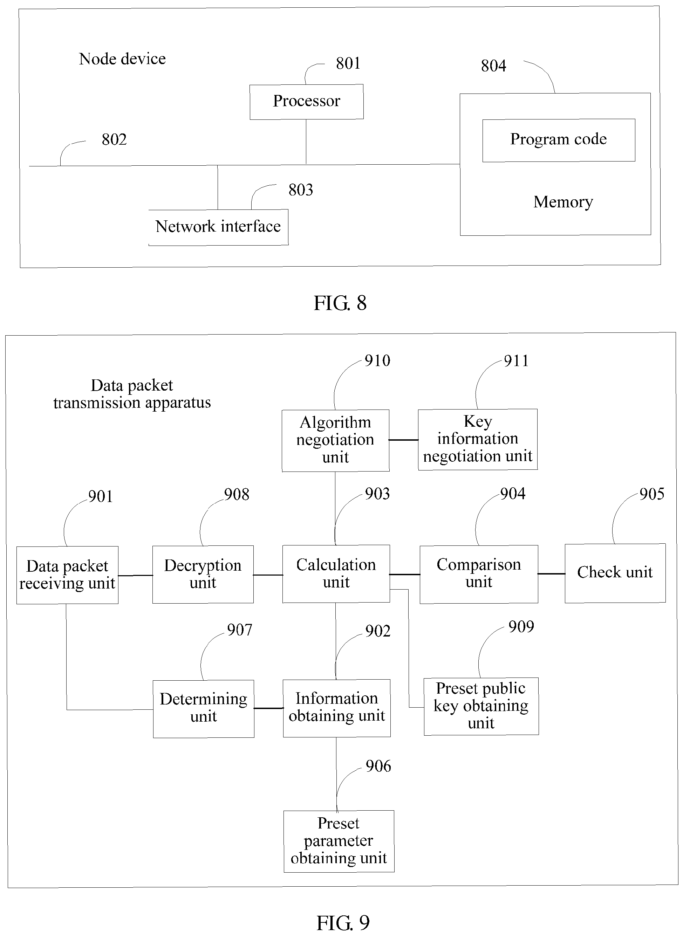

Referring to FIG. 8, FIG. 8 is a schematic structural diagram of a node device according to a first embodiment of the present invention. The node device provided in this embodiment of the present invention may be used to implement the methods implemented in the foregoing embodiments of the present invention shown in FIG. 1, FIG. 3, or FIG. 4. For ease of description, only parts related to this embodiment of the present invention are illustrated. For specific technical details that are not disclosed, refer to the embodiments of the present invention shown in FIG. 1, FIG. 3, or FIG. 4.

As shown in FIG. 8, the node device includes: at least one processor 801, for example, a CPU, at least one network interface 803, a memory 804, and at least one communications bus 802. The communications bus 802 is configured to implement connection and communication between the components. The network interface 803 may optionally include a standard wired interface or wireless interface (for example, a Wi-Fi interface), and is configured to communicate with an external network. The memory 804 may include a high-speed RAM memory, or may further include a non-volatile memory (non-volatile memory), for example, at least one magnetic disk storage. The memory 804 may optionally include at least one storage apparatus far away from the processor 801. The processor 801 may be combined with the data packet transmission apparatus shown in FIG. 6. The memory 804 stores a set of program code, and the processor 801 invokes the program code stored in the memory 804, to perform the following operations:
obtaining data type information and data packet identification information of a data packet;
calculating the data type information and the data packet identification information by using a preset MAC algorithm, to obtain a first message authentication code; and
sending the data packet that includes the data type information and the first message authentication code to a node device by using the network interface 803, so that the node device checks the data type information according to the first message authentication code.

In an optional embodiment, the data packet is a TCP data packet. In this case, after calculating the data type information and the data packet identification information by using the preset MAC algorithm, to obtain the first message authentication code, the processor 801 may further perform the following operation:
adding the data type information and the first message authentication code to a header of the TCP data packet.

Further, optionally, the data packet identification information includes at least one of the following: a send sequence number of the TCP data packet, an acknowledgement sequence number of the TCP data packet, or a preset parameter.

Further, optionally, before obtaining the data packet identification information of the data packet, the processor 801 may further perform the following operation:
obtaining the preset parameter sent by a TLS layer, where a protocol stack upper layer at which the data packet is located includes the TLS layer.

In an optional embodiment, the data packet is a TLS data packet. In this case, the sending, by the processor 801, the data packet that includes the data type information and the first message authentication code to a node device by using the network interface 803 may be specifically:
encapsulating the TLS data packet that includes the data type information and the first message authentication code in at least one TCP data packet; and
sending the at least one TCP data packet to the node device by using the network interface 803.

Further, optionally, the data type information is used to indicate a data type of a data part of a previous TLS data packet of the TLS data packet.

Further, optionally, the data packet identification information is a second message authentication code of a previous TLS data packet of the TLS data packet.

Further, optionally, before obtaining the data type information and the data packet identification information of the data packet, the processor 801 may further perform the following operation:
adding extension identifier information to the TLS data packet, where the extension identifier information is used to indicate that the TLS data packet is a data packet indicating a data type of a data part of a previous TLS data packet of the TLS data packet.

In an optional embodiment, before sending the data packet that includes the data type information and the first message authentication code to the node device by using the network interface 803, the processor 801 may further perform the following operation:
encrypting the first message authentication code by using a preset private key.

Further, optionally, before encrypting the first message authentication code by using the preset private key, the processor 801 may further perform the following operation:
obtaining the preset private key sent by the TLS layer.

In an optional embodiment, before calculating the data type information and the data packet identification information by using the preset MAC algorithm, to obtain the first message authentication code, the processor 801 may further perform the following operation:
when a TCP connection to the node device is established, negotiating with the node device to obtain the preset MAC algorithm.

In an optional embodiment, before calculating the data type information and the data packet identification information by using the preset MAC algorithm, to obtain the first message authentication code, the processor 801 may further perform the following operation:
obtaining the preset MAC algorithm sent by the TLS layer.

In an optional embodiment, the preset MAC algorithm may carry key information. In this case, the processor 801 calculates the data type information, the data packet identification information, and the key information by using the preset MAC algorithm, to obtain the first message authentication code.

Further, optionally, when a TCP connection to the node device is established, the processor 801 negotiates with the node device to obtain the key information.

Further, optionally, before calculating the data type information, the data packet identification information, and the key information by using the preset MAC algorithm, to obtain the first message authentication code, the processor 801 may further perform the following operation:
obtaining the key information sent by the TLS layer.

Specifically, the terminal described in this embodiment of the present invention may be configured to implement some or all procedures in the method embodiments described in the present invention with reference to FIG. 1, FIG. 3, or FIG. 4.

Referring to FIG. 9, FIG. 9 is a schematic structural diagram of a data packet transmission apparatus according to an embodiment of the present invention. The data packet transmission apparatus may be configured to implement some or all steps in the method embodiments shown with reference to FIG. 2 to FIG. 4. The data packet transmission apparatus may include at least a data packet receiving unit 901, an information obtaining unit 902, a calculation unit 903, a comparison unit 904, and a check unit 905.

The data packet receiving unit 901 is configured to receive a data packet sent by a node device, where the data packet carries data type information and a first message authentication code.

The information obtaining unit 902 is configured to obtain data packet identification information of the data packet.

The calculation unit 903 is configured to calculate the data type information and the data packet identification information by using a preset MAC algorithm, to obtain a third message authentication code.

The calculation unit 904 is configured to compare the first message authentication code with the third message authentication code.

The check unit 905 is configured to check the data type information according to a comparison result.

In an optional embodiment, the data packet is a TCP data packet. In this case, the data packet identification information includes at least one of the following: a send sequence number of the TCP data packet, an acknowledgement sequence number of the TCP data packet, or a preset parameter.

Further, optionally, the data packet transmission apparatus in this embodiment of the present invention may further include:
a preset parameter obtaining unit 906, configured to: when a TCP connection to the node device is established, interact with the node device to obtain the preset parameter.

In an optional embodiment, the data packet is a TLS data packet. In this case, the data packet transmission apparatus in this embodiment of the present invention may further include:
a determining unit 907, configured to: before the information obtaining unit 902 obtains the data packet identification information of the data packet, determine that the TLS data packet includes extension identifier information, where the extension identifier information is used to indicate that the TLS data packet is a data packet indicating a data type of a data part of a previous TLS data packet of the TLS data packet.

Further, optionally, the data packet identification information is a second message authentication code of a previous TLS data packet of the TLS data packet.

In an optional embodiment, the first message authentication code is encrypted by using a preset private key. In this case, the data packet transmission apparatus in this embodiment of the present invention may further include:
a decryption unit 908, configured to: after the data packet receiving unit 901 receives the data packet sent by the node device, decrypt the first message authentication code by using a preset public key.

Further, optionally, the data packet transmission apparatus in this embodiment of the present invention may further include:
a preset public key obtaining unit 909, configured to: when a TCP connection to the node device is established, interact with the node device to obtain the preset public key.

In an optional embodiment, the data packet transmission apparatus in this embodiment of the present invention may further include:
an algorithm negotiation unit 910, configured to: when a TCP connection to the node device is established, negotiate with the node device to obtain the preset MAC algorithm.

In an optional embodiment, the data packet transmission apparatus in this embodiment of the present invention may further include:
an algorithm negotiation unit 910, configured to: before the calculation unit 903 calculates the data type information and the data packet identification information by using the preset MAC algorithm, to obtain the third message authentication code, obtain the preset MAC algorithm sent by the TLS layer.

In an optional embodiment, the preset MAC algorithm may carry key information. In this case, the processor 903 calculates the data type information, the data packet identification information, and the key information by using the preset MAC algorithm, to obtain the first message authentication.

Further, optionally, the data packet transmission apparatus in this embodiment of the present invention may further include:
a key information negotiation unit 911, configured to: when a TCP connection to the node device is established, negotiate with the node device to obtain the key information.

Further, optionally, the data packet transmission apparatus in this embodiment of the present invention may further include:
a key information negotiation unit 911, configured to: before the calculation unit 902 calculates the data type information, the data packet identification information, and the key information by using the preset MAC algorithm, to obtain the first message authentication, obtain the key information sent by the TLS layer.

In the data packet transmission apparatus shown in FIG. 9, the data packet receiving unit 901 receives the data packet sent by the node device, where the data packet carries the data type information and the first message authentication code. The information obtaining unit 902 obtains the data packet identification information of the data packet. The calculation unit 903 calculates the data type information and the data packet identification information by using the preset MAC algorithm, to obtain the third message authentication code. The comparison unit 904 compares the first message authentication code with the third message authentication code. The check unit 905 checks the data type information according to a comparison result. It may be determined, by checking the data type information, whether the data type information is falsified by an illegal intermediate entity.

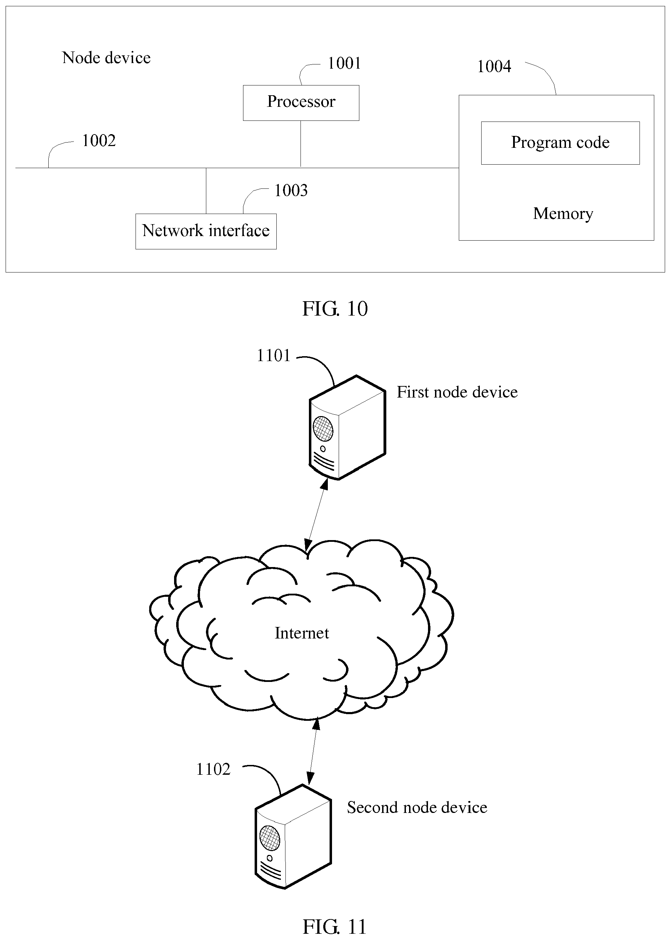

Referring to FIG. 10, FIG. 10 is a schematic structural diagram of a node device according to a second embodiment of the present invention. The node device provided in this embodiment of the present invention may be used to implement the methods implemented in the foregoing embodiments of the present invention shown in FIG. 2 to FIG. 4. For ease of description, only parts related to this embodiment of the present invention are illustrated. For specific technical details that are not disclosed, refer to the embodiments of the present invention shown in FIG. 2 to FIG. 4.

As shown in FIG. 10, the node device includes: at least one processor 1001, for example, a CPU, at least one network interface 1003, a memory 1004, and at least one communications bus 1002. The communications bus 1002 is configured to implement connection and communication between the components. The network interface 1003 may optionally include a standard wired interface or wireless interface (for example, a Wi-Fi interface), and is configured to communicate with an external network. The memory 1004 may include a high-speed RAM memory, or may further include a non-volatile memory (non-volatile memory), for example, at least one magnetic disk storage. The memory 1004 may optionally include at least one storage apparatus far away from the processor 1001. The processor 1001 may be combined with the data packet transmission apparatus shown in FIG. 9. The memory 1004 stores a set of program code, and the processor 1001 invokes the program code stored in the memory 1004, to perform the following operations:
receiving, by using the network interface 1003, a data packet sent by a node device, where the data packet carries data type information and a first message authentication code;
obtaining data packet identification information of the data packet;
calculating the data type information and the data packet identification information by using a preset MAC algorithm, to obtain a third message authentication code;
comparing the first message authentication code with the third message authentication code; and
checking the data type information according to a comparison result.

In an optional embodiment, the data packet is a TCP data packet. In this case, the data packet identification information includes at least one of the following: a send sequence number of the TCP data packet, an acknowledgement sequence number of the TCP data packet, or a preset parameter.

Further, optionally, before obtaining the data packet identification information of the data packet, the processor 1001 may further perform the following operation:
when a TCP connection to the node device is established, interacting with the node device to obtain the preset parameter.

In an optional embodiment, the data packet is a TLS data packet. In this case, before obtaining the data packet identification information of the data packet, the processor 1001 may further perform the following operation:
determining that the TLS data packet includes extension identifier information, where the extension identifier information is used to indicate that the TLS data packet is a data packet indicating a data type of a data part of a previous TLS data packet of the TLS data packet.

Further, optionally, the data packet identification information is a second message authentication code of a previous TLS data packet of the TLS data packet.

In an optional embodiment, the first message authentication code is encrypted by using a preset private key. In this case, after receiving, by using the network interface 1003, the data packet sent by the node device, the processor 1001 may further perform the following operation:
decrypting the first message authentication code by using a preset public key.

Further, optionally, before decrypting the first message authentication code by using the preset public key, the processor 1001 may further perform the following operation:
when a TCP connection to the node device is established, interacting with the node device to obtain the preset public key.

In an optional embodiment, before calculating the data type information and the data packet identification information by using the preset MAC algorithm, to obtain the third message authentication code, the processor 1001 may further perform the following operation:
when a TCP connection to the node device is established, negotiating with the node device to obtain the preset MAC algorithm.

In an optional embodiment, before calculating the data type information and the data packet identification information by using the preset MAC algorithm, to obtain the third message authentication code, the processor 1001 may further perform the following operation:
obtaining the preset MAC algorithm sent by the TLS layer.

In an optional embodiment, the preset MAC algorithm may carry key information. In this case, the processor 1001 calculates the data type information, the data packet identification information, and the key information by using the preset MAC algorithm, to obtain the third message authentication code.

Further, optionally, when a TCP connection to the node device is established, the processor 1001 negotiates with the node device to obtain the key information.

Further, optionally, before calculating the data type information, the data packet identification information, and the key information by using the preset MAC algorithm, to obtain the third message authentication code, the processor 1001 may further perform the following operation:
obtaining the key information sent by the TLS layer.

Specifically, the terminal described in this embodiment of the present invention may be configured to implement some or all procedures in the method embodiments described in the present invention with reference to FIG. 2 to FIG. 4.

Referring to FIG. 11, FIG. 11 is a schematic structural diagram of a data packet transmission system according to an embodiment of the present invention. As shown in the figure, the data packet transmission system in this embodiment of the present invention may include at least a first node device 1101 and a second node device 1102.

The first node device 1101 obtains data type information and data packet identification information of a data packet.

The first node device 1101 calculates the data type information and the data packet identification information by using a preset MAC algorithm, to obtain a first message authentication code.

The first node device 1101 sends the data packet that includes the data type information and the first message authentication code to the second node device 1102.

The second node device 1102 obtains the data packet identification information of the data packet.

The second node device 1102 calculates the data type information and the data packet identification information by using a preset MAC algorithm, to obtain a third message authentication code.

The second node device 1102 compares the first message authentication code with the third message authentication code.

The second node device 1102 checks the data type information according to a comparison result.

In an optional embodiment, the data packet is a TCP data packet. In this case, after calculating the data type information and the data packet identification information by using the preset MAC algorithm, to obtain the first message authentication code, the first node device 1101 may further perform the following operation:
adding the data type information and the first message authentication code to a header of the TCP data packet.

Further, optionally, the data packet identification information includes at least one of the following: a send sequence number of the TCP data packet, an acknowledgement sequence number of the TCP data packet, or a preset parameter.

Further, optionally, before obtaining the data packet identification information of the data packet, the first node device 1101 may further perform the following operation:
when a TCP connection to the second node device 1102 is established, interacting with the second node device 1102 to obtain the preset parameter.

In an optional embodiment, the data packet is a TLS data packet. In this case, the sending, by the first node device 1101, the data packet that includes the data type information and the first message authentication code to the second node device 1102 may be specifically:
encapsulating, by the first node device 1101, the TLS data packet that includes the data type information and the first message authentication code in at least one TCP data packet; and
sending, by the first node device 1101, the at least one TCP data packet to the second node device 1102.

Further, optionally, the data type information is used to indicate a data type of a data part of a previous TLS data packet of the TLS data packet.

Further, optionally, the data packet identification information is a second message authentication code of a previous TLS data packet of the TLS data packet.

Further, optionally, before obtaining the data type information and the data packet identification information of the data packet, the first node device 1101 may further perform the following operation:
adding extension identifier information to the TLS data packet, where the extension identifier information is used to indicate that the TLS data packet is a data packet indicating a data type of a data part of a previous TLS data packet of the TLS data packet.

In an optional embodiment, before sending the data packet that includes the data type information and the first message authentication code to the second node device 1102, the first node device 1101 may further perform the following operation:
encrypting the first message authentication code by using a preset private key.

In an optional embodiment, before calculating the data type information and the data packet identification information by using the preset MAC algorithm, to obtain the first message authentication code, the first node device may further perform the following operation:
when a TCP connection to the second node device 1102 is established, negotiating with the second node device 1102 to obtain the preset MAC algorithm.

In an optional embodiment, before calculating the data type information and the data packet identification information by using the preset MAC algorithm, to obtain the first message authentication code, the first node device 1101 may further perform the following operation:
obtaining the preset MAC algorithm sent by the TLS layer.

In an optional embodiment, the preset MAC algorithm may carry key information. In this case, the first node device 1101 calculates the data type information, the data packet identification information, and the key information by using the preset MAC algorithm, to obtain the third message authentication code.

Further, optionally, when a TCP connection to the second node device 1102 is established, the first node device 1101 negotiates with the second node device 1102 to obtain the key information.

Further, optionally, before calculating the data type information, the data packet identification information, and the key information by using the preset MAC algorithm, to obtain the third message authentication code, the first node device 1101 obtains the key information sent by the TLS layer.

In an optional embodiment, the first message authentication code is encrypted by using a preset private key. In this case, after receiving the data packet sent by the first node device 1101, the second node device 1102 may further perform the following operation:
decrypting the first message authentication code by using a preset public key.

Further, optionally, before decrypting the first message authentication code by using the preset public key, the second node device 1102 may further perform the following operation:
when a TCP connection to the first node device 1101 is established, interacting with the first node device 1101 to obtain the preset public key.

In the data packet transmission system shown in FIG. 12, the first node device 1101 calculates the data type information and the data packet identification information of the data packet by using the preset MAC algorithm, to obtain the first message authentication code, and sends the data packet that includes the data type information and the first message authentication code to the second node device 1102. The second node device 1102 obtains the data packet identification information of the data packet, calculates the data type information and the data packet identification information by using the preset MAC algorithm, to obtain the third message authentication code, compares the first message authentication code with the third message authentication code, and checks the data type information according to the comparison result. The first node device 1101 may perform security identification on the data type information of the data packet, thereby improving transmission reliability of the data type information.

In the descriptions of this specification, a description of a reference term such as "an embodiment", "some embodiments", "an example", "a specific example", or "some examples" means that a specific feature, structure, material, or characteristic that is described with reference to the embodiment or the example is included in at least one embodiment or example of the present invention. In the specification, the foregoing exemplary expressions of the terms are not necessarily with respect to a same embodiment or example. In addition, the described specific features, structures, materials, or characteristics may be combined in a proper manner in any one or more of the embodiments or examples. In addition, a person skilled in the art may integrate or combine different embodiments or examples and characteristics of different embodiments or examples described in the specification, as long as they do not conflict each other.

In addition, the terms "first" and "second" are merely intended for a purpose of description, and shall not be understood as an indication or implication of relative importance or implicit indication of the number of indicated technical features. Therefore, a feature limited by "first" or "second" may explicitly or implicitly include at least one of the feature. In the descriptions of the present invention, "multiple" means at least two, for example, two, or three, unless otherwise specifically limited in detail.

A description of any process or method in the flowcharts or described herein in another manner can be construed as one or more modules, fragments, or parts that include executable instructions used to implement a specific logical function or steps of a process. In addition, the scope of the preferred implementations of the present invention includes another implementation, where functions can be performed not in an order shown or discussed, including performing the functions basically at the same time or in reverse order according to the functions involved. This should be understood by a person skilled in the technical field to which the embodiments of the present invention belong.

Logic and/or steps shown in the flowcharts or described herein in other manners, for example, may be considered as a program list of executable instructions that are used to implement logic functions, and may be specifically implemented on any computer-readable medium, for an instruction execution system, apparatus, or device (for example, a computer-based system, a system including a processor, or another system that can fetch instructions from the instruction execution system, apparatus, or device and execute the instructions) to use, or for a combination of the instruction execution system, apparatus, or device to use. In terms of the specification, the "computer-readable medium" may be any apparatus that may include, store, communicate, propagate, or transmit programs, for the instruction execution system, apparatus, or device to use, or for a combination of the instruction execution system, apparatus, or device to use. More specific examples (this list is not exhaustive) of the computer-readable medium include the following: an electrical portion (an electrical apparatus) with one or more buses, a portable computer cartridge (a magnetic apparatus), a random-access memory (RAM), a read-only memory (ROM), an electrically erasable programmable read-only memory (EPROM or flash memory), an optical fiber apparatus, and a compact disc read-only memory (CD-ROM). In addition, the computer-readable medium may even be a piece of paper on which the programs can be printed or another appropriate medium. Because, for example, optical scanning may be performed on the paper or the another medium, then processing, such as edition, decoding, or another appropriate means when necessary, may be performed to obtain the programs in an electrical manner, and then the programs are stored in a computer memory.

It should be understood that, parts in the present invention may be implemented by using hardware, software, firmware, or a combination thereof. In the foregoing implementations, multiple steps or methods may be implemented by using software or firmware that is stored in a memory and is executed by an appropriate instruction execution system. For example, if hardware is used for implementation, being similar to implementation in another implementation, any item or a combination of the following well-known technologies in the art may be used for implementation: a discreet logic circuit having a logic gate circuit that is used to implement a logic function for a data signal, an application-specific integrated circuit having an appropriate combinatorial logic circuit, a programmable gate array (PGA), a field programmable gate array (FPGA), and the like.

A person of ordinary skill in the art may understand that all or some of the steps of the method embodiments may be implemented by a program instructing relevant hardware. The program may be stored in a computer readable storage medium. When the program runs, one or a combination of the steps of the method embodiments are performed.

In addition, functional units in the embodiments of the present invention may be integrated into one processing module, or each of the units may exist alone physically, or two or more units are integrated into one module. The integrated module may be implemented in a form of hardware, or may be implemented in a form of a software functional module. When the integrated module is implemented in the form of a software functional module and sold or used as an independent product, the integrated unit may be stored in a computer-readable storage medium.

The foregoing storage medium may be a read-only memory, a magnetic disk or an optical disk. Although the embodiments of the present invention are shown and described above, it can be understood that, the foregoing embodiments are examples, and cannot be construed as a limitation to the present invention. Within the scope of the present invention, a person of ordinary skill in the art may make changes, modifications, replacement, and variations to the foregoing embodiments.

## Claims

1. A data packet transmission method, comprising:
obtaining data type information and data packet identification information of a data packet;
calculating the data type information and the data packet identification information by using a preset message authentication code MAC algorithm, to obtain a first message authentication code; and
sending the data packet that comprises the data type information and the first message authentication code to a node device, so that the node device checks the data type information according to the first message authentication code.

2. The method according to claim 1, wherein the data packet is a Transmission Control Protocol TCP data packet; and
after the calculating the data type information and the data packet identification information by using a preset MAC algorithm, to obtain a first message authentication code, the method further comprises:
adding the data type information and the first message authentication code to a header of the TCP data packet.

3. The method according to claim 2, wherein the data packet identification information comprises at least one of the following: a send sequence number of the TCP data packet, an acknowledgement sequence number of the TCP data packet, or a preset parameter.

4. The method according to claim 3, wherein before the obtaining data packet identification information of a data packet, the method further comprises:
obtaining the preset parameter sent by a transport layer security TLS layer, wherein a protocol stack upper layer at which the data packet is located comprises the TLS layer.

5. The method according to claim 1, wherein the data packet is a TLS data packet; and
the sending the data packet that comprises the data type information and the first message authentication code to a node device comprises:
encapsulating the TLS data packet that comprises the data type information and the first message authentication code in at least one TCP data packet; and
sending the at least one TCP data packet to the node device.

6. The method according to claim 5, wherein the data type information is used to indicate a data type of a data part of a previous TLS data packet of the TLS data packet.

7. The method according to claim 5, wherein the data packet identification information is a second message authentication code of a previous TLS data packet of the TLS data packet.

8. The method according to claim 5, wherein before the obtaining data type information and data packet identification information of a data packet, the method further comprises:
adding extension identifier information to the TLS data packet, wherein the extension identifier information is used to indicate that the TLS data packet is a data packet indicating a data type of a data part of a previous TLS data packet of the TLS data packet.

9. The method according to any one of claims 1 to 8, wherein before the sending the data packet that comprises the data type information and the first message authentication code to a node device, the method further comprises:
encrypting the first message authentication code by using a preset private key.

10. The method according to claim 9, wherein before the encrypting the first message authentication code by using a preset private key, the method further comprises:
obtaining the preset private key sent by the TLS layer.

11. The method according to any one of claims 1 to 10, wherein before the calculating the data type information and the data packet identification information by using a preset MAC algorithm, to obtain a first message authentication code, the method further comprises:
when a TCP connection to the node device is established, negotiating with the node device to obtain the preset MAC algorithm.

12. The method according to any one of claims 1 to 10, wherein before the calculating the data type information and the data packet identification information by using a preset MAC algorithm, to obtain a first message authentication code, the method further comprises:
obtaining the preset MAC algorithm sent by the TLS layer.

13. The method according to any one of claims 1 to 12, wherein the preset MAC algorithm carries key information; and
the calculating the data type information and the data packet identification information by using a preset MAC algorithm, to obtain a first message authentication code comprises:
calculating the data type information, the data packet identification information, and the key information by using the preset MAC algorithm, to obtain the first message authentication code.

14. The method according to claim 13, wherein before the calculating the data type information, the data packet identification information, and the key information by using the preset MAC algorithm, to obtain the first message authentication code, the method further comprises:
when a TCP connection to the node device is established, negotiating with the node device to obtain the key information.

15. The method according to claim 13, wherein before the calculating the data type information, the data packet identification information, and the key information by using the preset MAC algorithm, to obtain the first message authentication code, the method further comprises:
obtaining the key information sent by the TLS layer.

16. A data packet transmission method, comprising:
receiving a data packet sent by a node device, wherein the data packet carries data type information and a first message authentication code;
obtaining data packet identification information of the data packet;
calculating the data type information and the data packet identification information by using a preset MAC algorithm, to obtain a third message authentication code;
comparing the first message authentication code with the third message authentication code; and
checking the data type information according to a comparison result.

17. The method according to claim 16, wherein the data packet is a TCP data packet; and
the data packet identification information comprises at least one of the following: a send sequence number of the TCP data packet, an acknowledgement sequence number of the TCP data packet, or a preset parameter.

18. The method according to claim 17, wherein before the obtaining data packet identification information of the data packet, the method further comprises:
when a TCP connection to the node device is established, interacting with the node device to obtain the preset parameter.

19. The method according to claim 16, wherein the data packet is a TLS data packet; and
before the obtaining data packet identification information of the data packet, the method further comprises:
determining that the TLS data packet comprises extension identifier information, wherein the extension identifier information is used to indicate that the TLS data packet is a data packet indicating a data type of a data part of a previous TLS data packet of the TLS data packet.

20. The method according to claim 19, wherein the data packet identification information is a second message authentication code of a previous TLS data packet of the TLS data packet.

21. The method according to any one of claims 16 to 20, wherein the first message authentication code is encrypted by using a preset private key; and
after the receiving a data packet sent by a node device, the method further comprises:
decrypting the first message authentication code by using a preset public key.

22. The method according to claim 21, wherein before the decrypting the first message authentication code by using a preset public key, the method further comprises:
when a TCP connection to the node device is established, interacting with the node device to obtain the preset public key.

23. The method according to any one of claims 16 to 22, wherein before the calculating the data type information and the data packet identification information by using a preset MAC algorithm, to obtain a third message authentication code, the method further comprises:
when a TCP connection to the node device is established, negotiating with the node device to obtain the preset MAC algorithm.

24. The method according to any one of claims 16 to 22, wherein before the calculating the data type information and the data packet identification information by using a preset MAC algorithm, to obtain a third message authentication code, the method further comprises:
obtaining the preset MAC algorithm sent by the TLS layer.

25. The method according to any one of claims 16 to 24, wherein the preset MAC algorithm carries key information; and
the calculating the data type information and the data packet identification information by using a preset MAC algorithm, to obtain a third message authentication code comprises:
calculating the data type information, the data packet identification information, and the key information by using the preset MAC algorithm, to obtain the third message authentication code.

26. The method according to claim 25, wherein before the calculating the data type information, the data packet identification information, and the key information by using the preset MAC algorithm, to obtain the third message authentication code, the method further comprises:
when a TCP connection to the node device is established, negotiating with the node device to obtain the key information.

27. The method according to claim 25, wherein before the calculating the data type information, the data packet identification information, and the key information by using the preset MAC algorithm, to obtain the third message authentication code, the method further comprises:
obtaining the key information sent by the TLS layer.

28. A data packet transmission apparatus, comprising:
an information obtaining unit, configured to obtain data type information and data packet identification information of a data packet;
a calculation unit, configured to calculate the data type information and the data packet identification information by using a preset MAC algorithm, to obtain a first message authentication code; and
a data packet sending unit, configured to send the data packet that comprises the data type information and the first message authentication code to a node device, so that the node device checks the data type information according to the first message authentication code.

29. The apparatus according to claim 28, wherein the data packet is a TCP data packet; and
the apparatus further comprises:
an information addition unit, configured to: after the calculation unit calculates the data type information and the data packet identification information by using the preset MAC algorithm, to obtain the first message authentication code, add the data type information and the first message authentication code to a header of the TCP data packet.

30. The apparatus according to claim 29, wherein the data packet identification information comprises at least one of the following: a send sequence number of the TCP data packet, an acknowledgement sequence number of the TCP data packet, or a preset parameter.

31. The apparatus according to claim 30, wherein the apparatus further comprises:
a preset parameter obtaining unit, configured to: before the information obtaining unit obtains the data packet identification information of the data packet, obtain the preset parameter sent by a TLS layer, wherein a protocol stack upper layer at which the data packet is located comprises the TLS layer.

32. The apparatus according to claim 28, wherein the data packet is a TLS data packet; and
the data packet sending unit comprises:
an encapsulation module, configured to encapsulate the TLS data packet that comprises the data type information and the first message authentication code in at least one TCP data packet; and
a data packet sending module, configured to send the at least one TCP data packet to the node device.

33. The apparatus according to claim 32, wherein the data type information is used to indicate a data type of a data part of a previous TLS data packet of the TLS data packet.

34. The apparatus according to claim 32, wherein the data packet identification information is a second message authentication code of a previous TLS data packet of the TLS data packet.

35. The apparatus according to claim 32, wherein the apparatus further comprises:
an information addition unit, configured to: before the information obtaining unit obtains the data type information and the data packet identification information of the data packet, add extension identifier information to the TLS data packet, wherein the extension identifier information is used to indicate that the TLS data packet is a data packet indicating a data type of a data part of a previous TLS data packet of the TLS data packet.

36. The apparatus according to any one of claims 28 to 35, wherein the apparatus further comprises:
an encryption unit, configured to: before the data packet sending unit sends the data packet that comprises the data type information and the first message authentication code to the node device, encrypt the first message authentication code by using a preset private key.

37. The apparatus according to claim 35, wherein the apparatus further comprises:
a preset private key obtaining unit, configured to: before the encryption unit encrypts the first message authentication code by using the preset private key, obtain the preset private key sent by the TLS layer.

38. The apparatus according to any one of claims 28 to 37, wherein the apparatus further comprises:
an algorithm negotiation unit, configured to: when a TCP connection to the node device is established, negotiate with the node device to obtain the preset MAC algorithm.

39. The apparatus according to any one of claims 28 to 37, wherein the apparatus further comprises:
an algorithm negotiation unit, configured to: before the calculation unit calculates the data type information and the data packet identification information by using the preset MAC algorithm, to obtain the first message authentication code, obtain the preset MAC algorithm sent by the TLS layer.

40. The apparatus according to any one of claims 28 to 39, wherein the preset MAC algorithm carries key information; and
the calculation unit is configured to calculate the data type information, the data packet identification information, and the key information by using the preset MAC algorithm, to obtain the first message authentication code.

41. The apparatus according to claim 40, wherein the apparatus further comprises:
a key information negotiation unit, configured to: when a TCP connection to the node device is established, negotiate with the node device to obtain the key information.

42. The apparatus according to claim 40, wherein the apparatus further comprises:
a key information negotiation unit, configured to: before the calculation unit calculates the data type information, the data packet identification information, and the key information by using the preset MAC algorithm, to obtain the first message authentication code, obtain the key information sent by the TLS layer.

43. A node device, comprising a processor, a memory, and a network interface, wherein the memory stores a set of program code, and the processor is configured to invoke the program code stored in the memory, to perform the following operations:
obtaining data type information and data packet identification information of a data packet;
calculating the data type information and the data packet identification information by using a preset MAC algorithm, to obtain a first message authentication code; and
sending the data packet that comprises the data type information and the first message authentication code to a node device, so that the node device checks the data type information according to the first message authentication code.

44. A data packet transmission apparatus, comprising:
a data packet receiving unit, configured to receive a data packet sent by a node device, wherein the data packet carries data type information and a first message authentication code;
an information obtaining unit, configured to obtain data packet identification information of the data packet;
a calculation unit, configured to calculate the data type information and the data packet identification information by using a preset MAC algorithm, to obtain a third message authentication code;
a calculation unit, configured to compare the first message authentication code with the third message authentication code; and
a check unit, configured to check the data type information according to a comparison result.

45. The apparatus according to claim 44, wherein the data packet is a TCP data packet; and
the data packet identification information comprises at least one of the following: a send sequence number of the TCP data packet, an acknowledgement sequence number of the TCP data packet, or a preset parameter.

46. The apparatus according to claim 45, wherein the apparatus further comprises:
a preset parameter obtaining unit, configured to: when a TCP connection to the node device is established, interact with the node device to obtain the preset parameter.

47. The apparatus according to claim 44, wherein the data packet is a TLS data packet; and
the apparatus further comprises:
a determining unit, configured to: before the information obtaining unit obtains the data packet identification information of the data packet, determine that the TLS data packet comprises extension identifier information, wherein the extension identifier information is used to indicate that the TLS data packet is a data packet indicating a data type of a data part of a previous TLS data packet of the TLS data packet.

48. The apparatus according to claim 47, wherein the data packet identification information is a second message authentication code of a previous TLS data packet of the TLS data packet.

49. The apparatus according to any one of claims 44 to 48, wherein the first message authentication code is encrypted by using a preset private key; and
the apparatus further comprises:
a decryption unit, configured to: after the data packet receiving unit receives the data packet sent by the node device, decrypt the first message authentication code by using a preset public key.

50. The apparatus according to claim 49, wherein the apparatus further comprises:
a preset public key obtaining unit, configured to: when a TCP connection to the node device is established, interact with the node device to obtain the preset public key.

51. The apparatus according to any one of claims 44 to 50, wherein the apparatus further comprises:
an algorithm negotiation unit, configured to: when a TCP connection to the node device is established, negotiate with the node device to obtain the preset MAC algorithm.

52. The apparatus according to any one of claims 44 to 50, wherein the apparatus further comprises:
an algorithm negotiation unit, configured to: before the calculation unit calculates the data type information and the data packet identification information by using the preset MAC algorithm, to obtain the third message authentication code, obtain the preset MAC algorithm sent by the TLS layer.

53. The apparatus according to any one of claims 44 to 52, wherein the preset MAC algorithm carries key information; and
the calculation unit is configured to calculate the data type information, the data packet identification information, and the key information by using the preset MAC algorithm, to obtain the third message authentication code.

54. The apparatus according to claim 53, wherein the apparatus further comprises:
a key information negotiation unit, configured to: when a TCP connection to the node device is established, negotiate with the node device to obtain the key information.

55. The apparatus according to claim 53, wherein the apparatus further comprises:
a key information negotiation unit, configured to: before the calculation unit calculates the data type information, the data packet identification information, and the key information by using the preset MAC algorithm, to obtain the third message authentication code, obtain the key information sent by the TLS layer.

56. A node device, comprising a processor, a memory, and a network interface, wherein the memory stores a set of program code, and the processor is configured to invoke the program code stored in the memory, to perform the following operations:
receiving a data packet sent by a node device, wherein the data packet carries data type information and a first message authentication code;
obtaining data packet identification information of the data packet;
calculating the data type information and the data packet identification information by using a preset MAC algorithm, to obtain a third message authentication code;
comparing the first message authentication code with the third message authentication code; and
checking the data type information according to a comparison result.

57. A data packet transmission system, comprising the data packet transmission apparatus according to any one of claims 28 to 42 and the data packet transmission apparatus according to any one of claims 44 to 55.
